(19) **Europäisches Patentamt**

**European Patent Office**

**Office européen des brevets**

(11) **EP 1 226 924 B1**

(12) **EUROPEAN PATENT SPECIFICATION**

(45) Date of publication and mention
of the grant of the patent:
**15.02.2006 Bulletin 2006/07**

(51) Int Cl.:
**B29D 11/00** (2006.01)

(21) Application number: **02100039.3**

(22) Date of filing: **18.01.2002**

(54) **Lens Manufacturing Process**

Verfahren zur Herstellung von Linsen

Procédé pour la fabrication de lentilles

(84) Designated Contracting States:
**AT BE CH CY DE DK ES FI FR GB GR IE IT LI LU
MC NL PT SE TR**

(30) Priority: **24.01.2001 US 263922 P**

(43) Date of publication of application:
**31.07.2002 Bulletin 2002/31**

(73) Proprietors:
• **Novartis AG**
**4056 Basel (CH)**
Designated Contracting States:
**BE CH CY DE DK ES FI FR GB GR IE IT LI LU MC
NL PT SE TR**
• **Novartis Pharma GmbH**
**1230 Wien (AT)**
Designated Contracting States:
**AT**

(72) Inventors:
• **Gobron, Stephane**
**Mount Prospect, IL 60056 (US)**
• **Rovani, William**
**Mount Prospect, IL 60056 1411 (US)**

(74) Representative: **de Weerd, Petrus G.W. et al
Novartis International AG
Corporate Intellectual Property
4002 Basel (CH)**

**Description**

Background

This invention relates to the preparation of soft hydrogel ophthalmic lenses through a molding process. More particularly, the invention relates to ophthalmic lenses, such as contact lenses and intraocular lenses, made by the molding of polymers.

The use of contact lenses as corrective ophthalmic devices, as well as for cosmetic purposes, is well known. Various materials have been utilized in making contact lenses, but these materials have been found less than ideal.

Historically, contact lenses have been manufactured by one of the three processes: lathing, spin-casting, and cast molding. Lathing is not able to meet demands of low-cost, high-volume, high-yield rapid production. Efforts to reduce the inherent cost disadvantages of lathing have produced a process that is a hybrid of lathing and cast molding. For example, lenses may be prepared by casting one side of the lens and lathing the other side. This process is less costly than lathing, but not as inexpensive as a complete cast molding process.

Spin-casting, on the other hand, often results in lenses with optical quality and fitting problems because the back surface of the lens is determined by centrifugal force and not the requirements of an optimized lens mold design.

In contrast, cast molding requires the use of two complementary molds. These molds are often disposable, and the cost to replace the mold for each new lens is a significant part of the total cost of the final lens. Furthermore, lenses made by cast molding also suffer a large number of quality defects during *in situ* polymerization due to shrinkage. For example, shrinkage may cause surface voids and the non-adherence of the final product to the lens design. Others have attempted to eliminate shrinkage and thereby improve cast-molding techniques. For example, U.S. Patent No. 5,039,459 to Kindt-Larsen et al. discloses a replaceable diluent in the monomer mixture polymerized in the casting cup. However, the disposable casting cup with all of its costs and complications, as well as the complexities of removing the replaceable diluent, are still present Other disadvantages of these processes include long polymerization times, long hydration times, and low global yield of the final product. One advantage of the invention described below is that the need for the casting cup and replaceable diluent are eliminated.

US-A-5776381 discloses a process for production of optical lenses in which the moulds are capable of being used repeatedly. In one embodiment already polymerized plastically deformable material is injected between the moulding surfaces by means of a nozzle. As the mould closes, excess lens material is pressed into an overflow.

Accordingly, there is room for improvement in developing suitable processes to make lenses from new polymers with improved properties. Attempts have been made to use injection molding processes to make ophthalmic lenses from polymethylmethacrylate (PMMA). PMMA lenses are hard and not oxygen permeable, i.e., they do not compare to the quality of softer hydrogel lenses. Thus, while injection molded processes, such as typically used in the plastics industry, are capable of high-speed, high-volume, consistent-quality mass production, there have not been good ophthalmic lens materials that possess the desirable properties for ophthalmic lenses that could take advantage of those plastics manufacturing processes.

Although soft hydrogel polymers have more desirable qualities for ophthalmic lenses than does PMMA, conventional soft hydrogel ophthalmic lenses are made from crosslinked hydrophilic polymers that cannot be prepared in large batches and later be melt processed in standard molding equipment Because of the difficulties in processing crosslinked polymers, there is a need for a process that uses thermoformable or melt processable polymers that can be made in large batches of a consistent quality, to be used in high speed, high volume molding equipment to make a soft ophthalmic lens with desirable physical qualities. Such a process can also offer advantages in the form of reusable molds, high overall yield, off-line main chemistry such that the reaction in the mold includes the final crosslinking. It is desirable that the process is highly automated and integrated. Such a process would be useful for soft ophthalmic lens manufacturing, but could also be used for any small optical object, and small plastic object. The present invention addresses these needs, and also provides other advantages as will be evident from the following description.

Brief Summary

The invention relates to a method for making a soft ophthalmic lens comprising: providing a first mold part having a front curve molding surface for the ophthalmic lens; providing a second mold part having a back curve molding surface for the ophthalmic lens, the mold parts adapted to mate together to form a mold cavity in the shape of an ophthalmic lens having a variable volume at least between a first volume and a second volume, the second volume being greater than the first volume; extruding a melt-processable polymer, the polymer having a glass transition temperature ($T_g$), a flow temperature ($T_F$), and a degradation temperature ($T_D$); cutting a sample from the extruded polymer, the sample having a volume between the first volume and the second volume; depositing the sample in the first mold part; moving the mold parts together to form a mold cavity with the back curve molding surface contacting the sample; squeezing the mold parts together with a predetermined force, wherein the mold parts have a clearance such that gas can be vented from the mold cavity, allowing the polymer to solidify and form a lens; opening the mold; removing the lens from the mold; hydrating the ophthalmic lens; and packaging the ophthalmic lens.

Brief description of the drawings

Figure 1 is a flowchart of a process for manufacturing ophthalmic lenses.
Figure 2 is a flowchart of a process for the post processing of ophthalmic lenses.
Figure 3 is a schematic of an extruder and pelletizing system.
Figure 4 is a view of an extrusion die for a wire.
Figure 5 is a view of a moving knife with a pellet.
Figure 6 is a view of a moving knife with a groove.
Figure 7 is a view of a moving knife and an extrusion die.
Figure 8 is a schematic of a moving knife assembly.
Figure 9 is a schematic of an extruder and disk punch-out system.
Figures 10A-C and 11 are schematics of a disk punch-out system.
Figure 12 is a schematic of a reaction injection molding system.
Figures 13A-D are diagrams of mixing chambers for a reaction injection molding system.
Figures 14-15 are views of a compression-molding mold.
Figures 16-17 are schematics of a compression-molding cavity.
Figures 18 and 19A-C are views of a thermoforming apparatus.
Figure 20 is a diagram of an injection molding apparatus.
Figures 21A-C are diagrams of molds for an injection molding apparatus.
Figure 22 is a graph of reaction progress versus time for a crosslinking reaction.
Figures 23A-B are views of a lens ejection apparatus.

Detailed Description

The present invention relates to a process for manufacturing ophthalmic lenses. As used herein, the term ophthalmic lenses refers to optical lenses which are in contact with the eye, such as contact lenses and intraocular lenses, but not to spectacle lenses. Preferably, the term ophthalmic lenses refers to contact lenses. The method of the invention is used to produce soft hydrogel ophthalmic lenses.

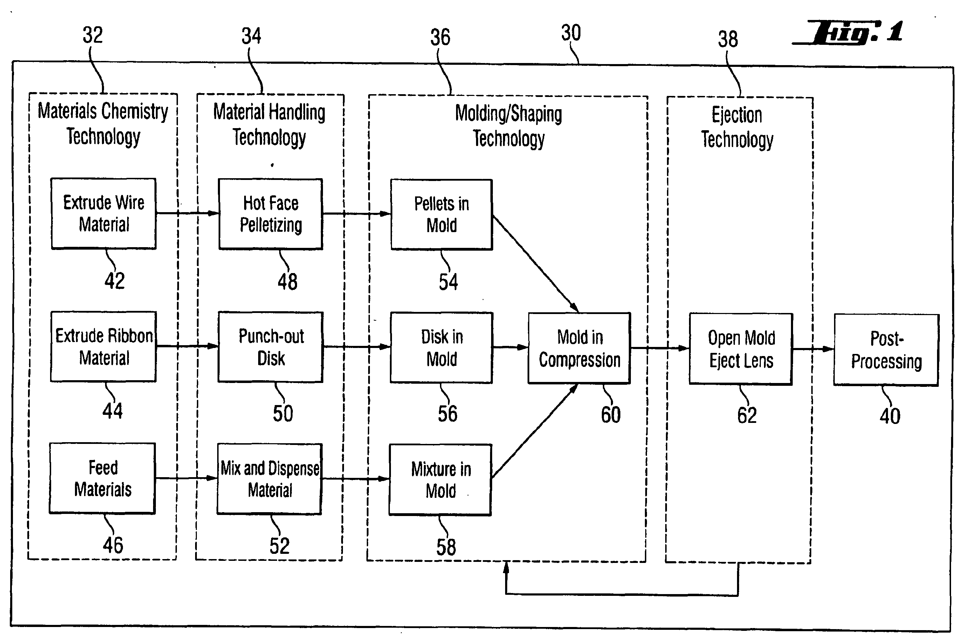

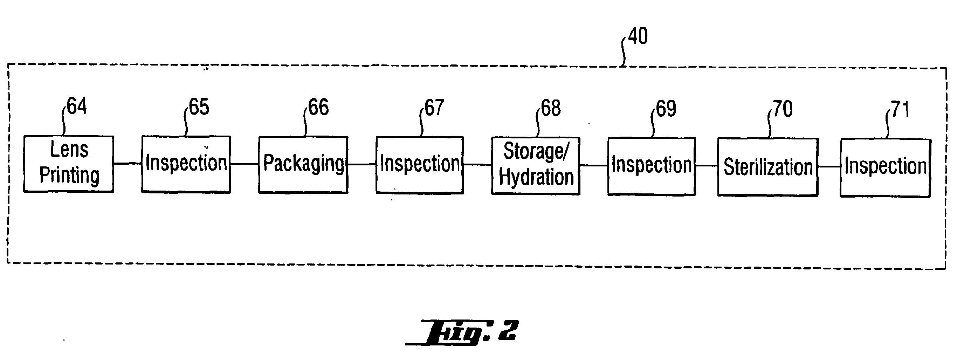

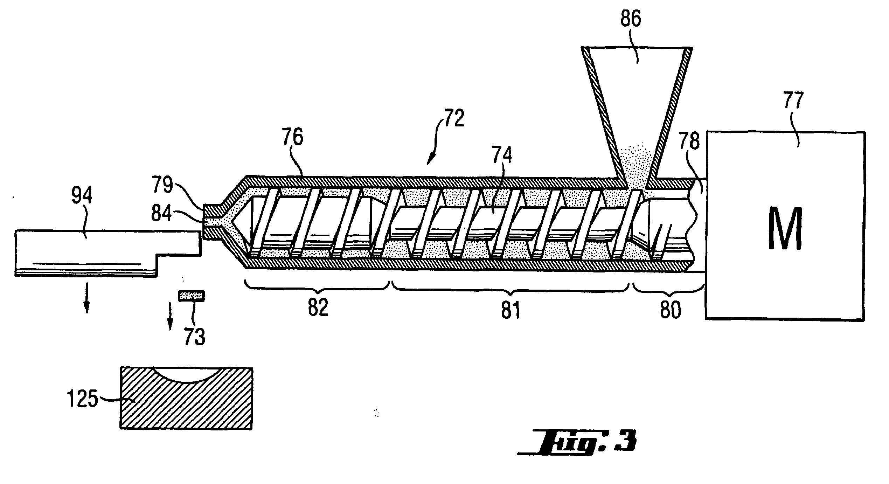

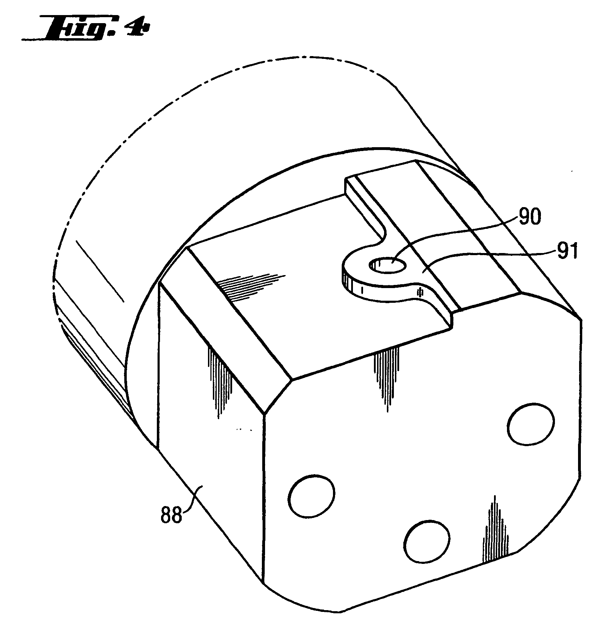

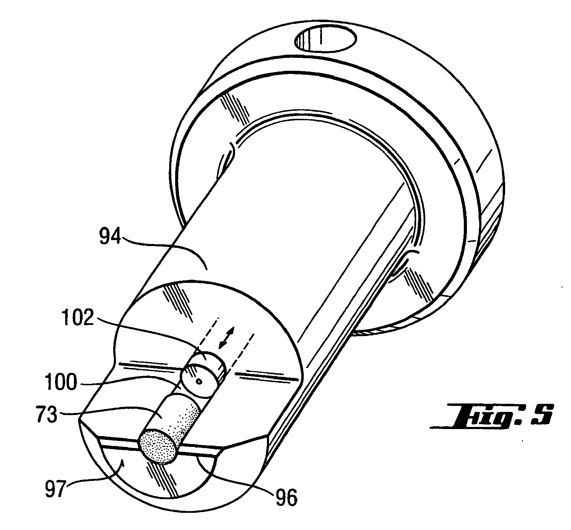

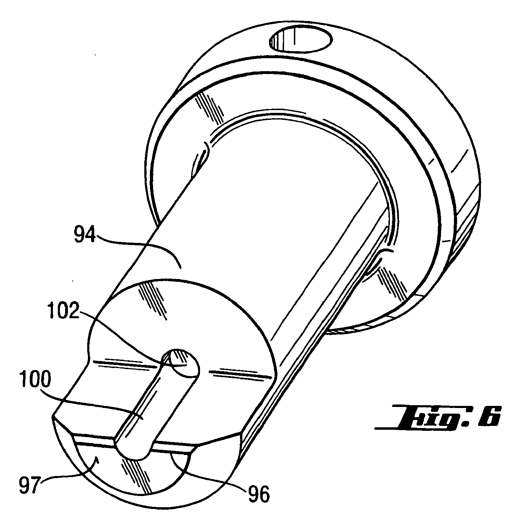

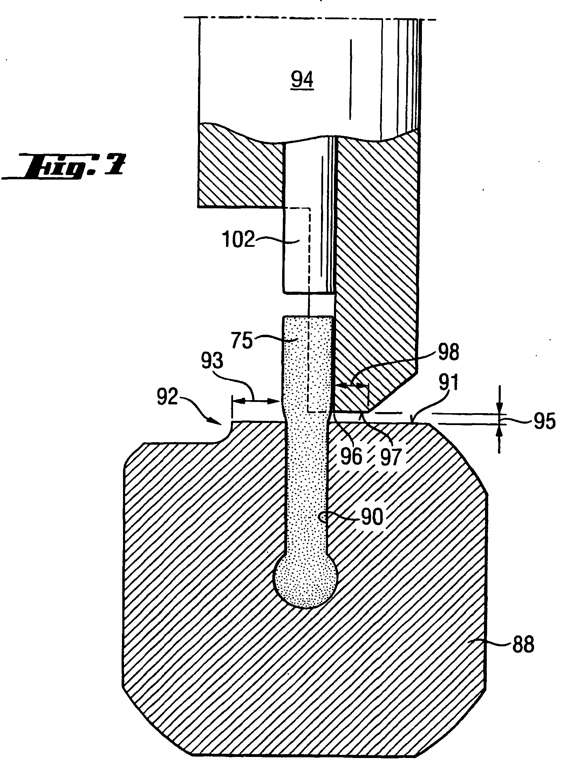

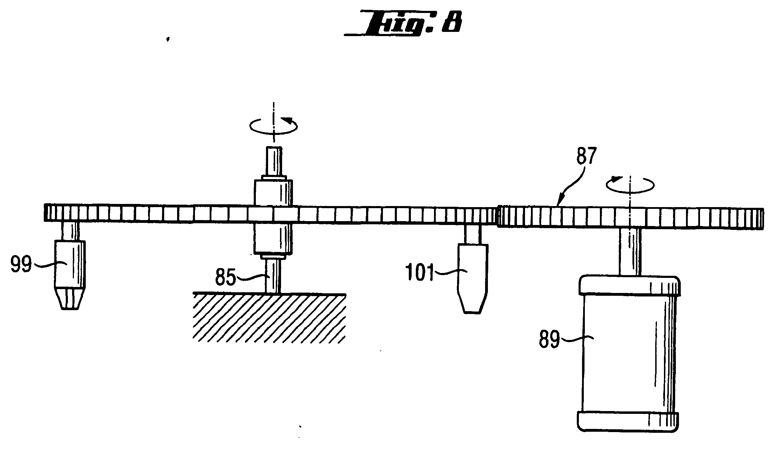

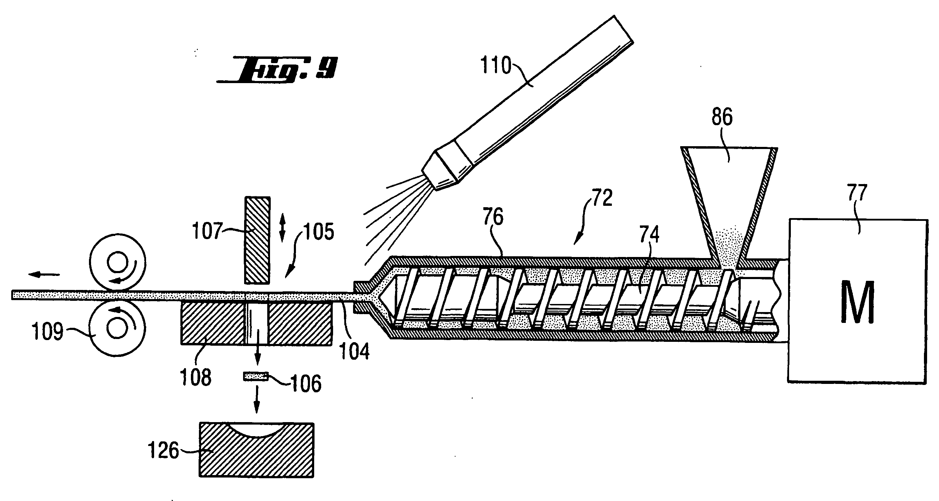

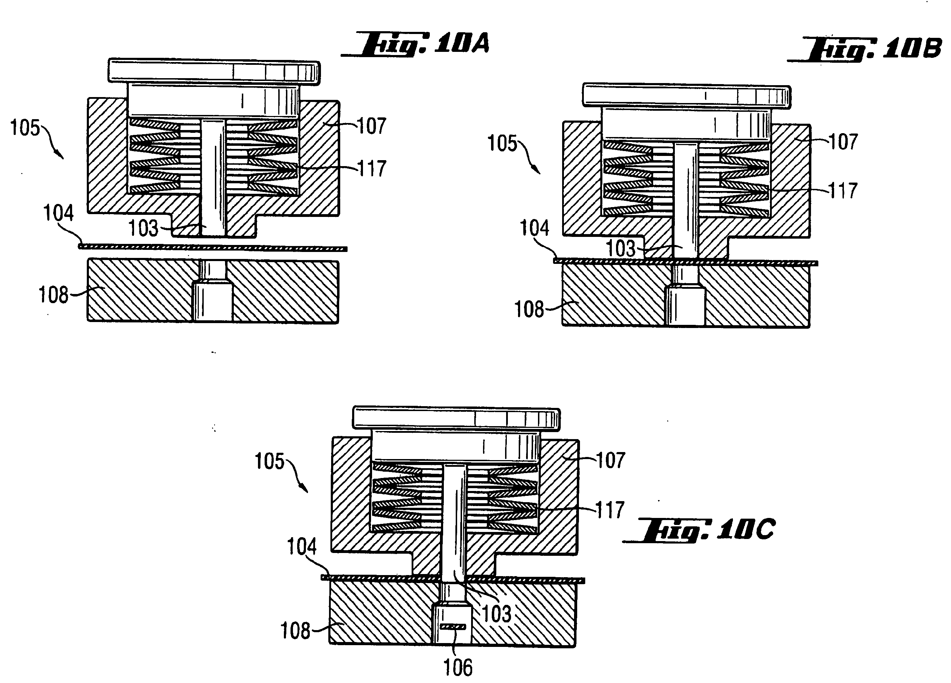

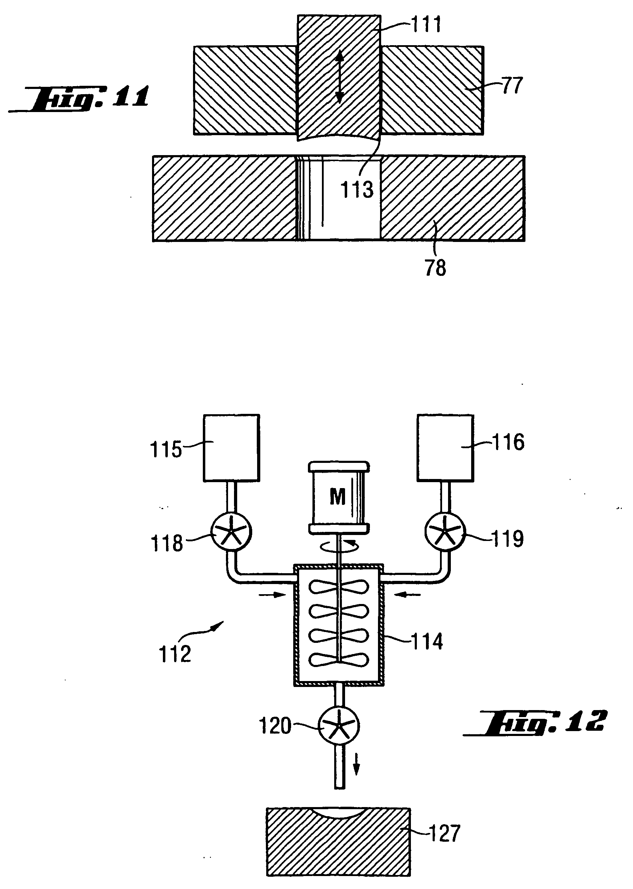

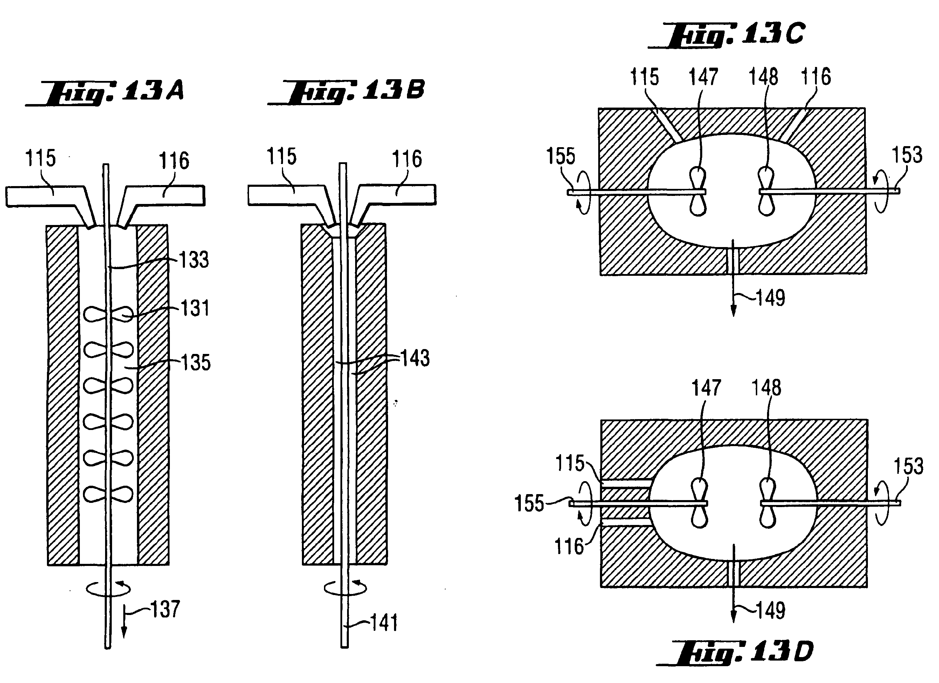

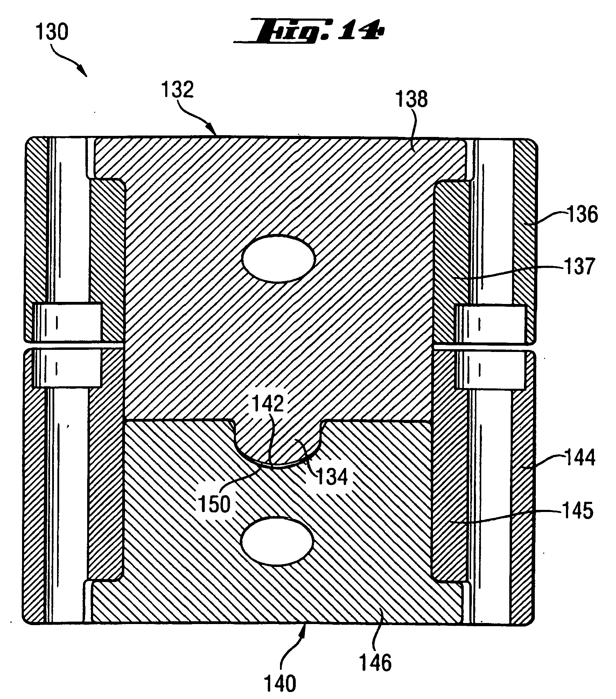

As illustrated in Figure 1, the process 30 is composed of several phases, induding the raw material processing phase 32, the material metering and dispensing phase 34, the material shaping phase 36, and the ejection/do-motding phase 38. The material-shaping phase can utilize various molding processes induding compression molding, thermoforming, reaction injection molding, injection molding, and variations thereof. The ejection/de-molding phase allows reuse of the shaping molds or dies. The process can be automated in a sequence of operations. In this configuration, three different material formats can be used for the overall process 30. Polymer can be extruded as a wire 42, polymer can be extruded as a ribbon 44, or feed materials 46 can be used which can form a polymer upon polymerization. The product of wire extrusion 42 is subjected to a hot-face pelletizing procedure 48 to form a sample in the form of a pellet. This pellet is then deposited in a mold 54. Alternatively, the product of ribbon extrusion 44 is subjected to a disk punch-out procedure 50 to form a sample in the form of a disk. This disk is then deposited in a mold 56. Alternatively, the feed materials 46 can be mixed and dispensed 52 such that a fluid moldable material is deposited in a mold 58. For each of the three routes, the mold is compressed 60 under conditions sufficient to allow the material to solidify into a lens. These conditions may include, for example, an applied force, the temperature(s) of the mold, and/or time of molding. The mold is then opened and the lens ejected from the mold 62. The mold is preferably reusable such that process 30 can be a cyclic process.

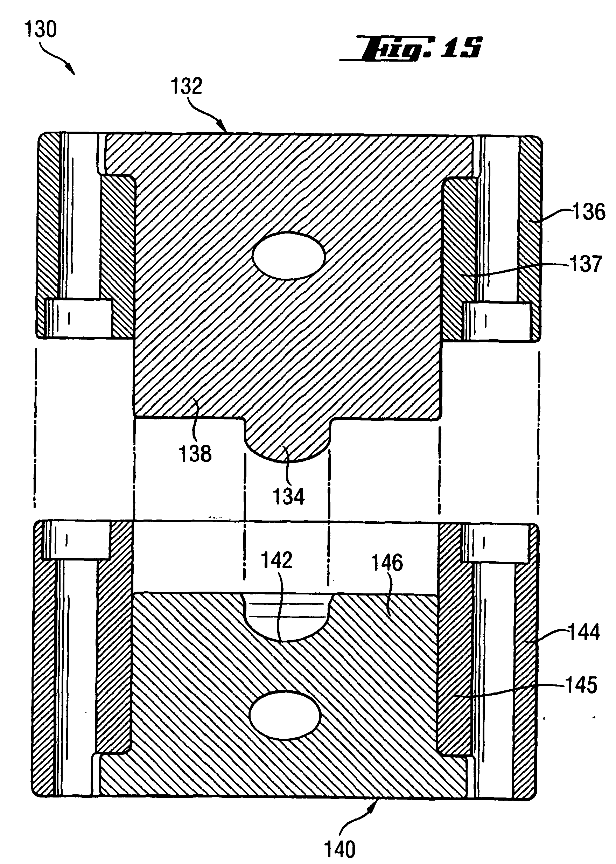

The process may also include a post-processing phase 40 as illustrated in Figure 2. The molded lens may be printed 64 and is preferably packaged in a sterile saline solution 66, stored and hydrated 68, and sterilized 70. Optional inspections 65, 67, 69, and 71 may be performed. It is not necessary that the steps are performed in the order shown. For example, packaging 66 and storage/hydration 68 may be performed simultaneously, hydration 68 may be performed in the mold as part of the lens ejection process 62, or sterilization 70 can occur during storage/hydration 68.

The raw materials for this process are melt-processable polymers. Although any melt-processable polymer may be used to make lens-like objects, ophthalmic lenses are preferably made of polymers which will form a hydrogel when hydrated. Examples of such polymers useful for the present invention are described in WO 01/05578, entitled Thermoformable Ophthalmic Lens, to Chapoy et al., filed July 14, 2000. If the process employs reaction injection molding in the material-shaping phase, the material preferably includes at least one reactive pre-polymer. In this embodiment, the feed materials are provided in fluid form, either neat or in solution, and are mixed together such that they will react. The final product of this reaction is a polymer network hydrogel.

A melt processable polymer is a polymer, which can flow at an appropriate temperature and applied force without significant degradation. This type of polymer, when melted and deposited in a mold, can be formed into an object having a discrete shape. In some cases, the polymer may simply be cast into a mold. In other cases, force is applied to keep the melted polymer in the mold. When the polymer has solidified, it will retain the shape of the mold, although some shrinkage and warpage may occur. Shrinkage and warpage preferably are minimized or are accommodated in the mold design. Polymers, which can be melt processed more than once are referred to as thermoplastics. Thermoplastics are generally made of independent polymer molecules, or chains. Polymers, which cannot be molded again after a formation step are referred to as thermosets. When subjected to appropriate conditions, thermosets will have linkages between the polymer chains. This provides a network structure, which prevents long-range motion of individual chains.

Polymers may be characterized by various material temperatures. The glass transition temperature ($T_g$) is the temperature below which the polymer is a rigid glass and above which the polymer is a more flexible material. For example, as the temperature of a polymer is increased through the glass transition region, the polymer may be transformed from a rubbery material to a gum and eventually into a fluid. The $T_g$ is conveniently measured by differential scanning calorimetry (DSC) as the temperature at which there is a change in heat capacity of the polymer, which is generally indicated as a deviation from the base curve of heat flow versus temperature. The flow temperature ($T_F$) is the temperature above which the polymer can be made to take the shape of its immediate surroundings under a specific force or pressure. The $T_F$ is higher than the $T_g$. The degradation temperature ($T_D$) is the temperature above which the polymer molecules begin to degrade. This degradation may take many forms including, for example formation of a charred network and/or a breakdown of the polymer. Polymer breakdown can be observed as a decline in the molecular weight of the polymer over time. Polymer molecular weights can be determined by a variety of methods including size exclusion chromatography (SEC), and are generally expressed as weight averages or number averages. For a material to be useful in melt processing, $T_D$ should be greater than $T_F$. Melt processing is thus carried out between $T_F$ and $T_D$.

As mentioned above, polymer chains can have linkages, which prevent them from flowing at elevated temperatures. These crosslinked polymers may also be referred to as network polymers, since the molecular structure approximates an endless network of chemical bonds. Polymer networks will not dissolve, but may swell when contacted with appropriate solvents, depending on the chemical nature of the polymer. If a polymer can be swelled with water, it is said to be a hydrogel.

Polymer networks can be formed in a variety of ways. A sample of building blocks for the polymer, referred to as monomer, can be polymerized into a polymer such that the final product is a network. This is typically achieved through the use of crosslinking agents which have more than two reactive site.

Alternatively, a material may contain chemically active groups, which can be reacted to form crosslinks between polymer molecules. These reactions can occur with other polymer molecules or may occur with reactive additives mixed with the polymer. These reactions can be triggered thermally or by light impingement (photochemically). The network-forming material may be a high molecular weight polymer, a low molecular weight oligomer, or may have an intermediate molecular weight. The chemically active groups may be distributed along the polymer chain, or they may be isolated at one or more chain ends. The term prepolymer refers to low to medium molecular weight oligomers or polymers, which have chemically active groups at their chain ends. The term latent crosslinking group refers to chemically active groups present on a medium to high molecular weight polymer. These groups are described as latent since the polymer can be melt-processed as a conventional thermoplastic without inducing network formation between the chemically active groups.

Physical networks can also be useful for hydrogel formation. A physical network forms as a result of the attraction between regions of the polymer that are not compatible with the surrounding solvent. For example, a sample of polymer molecules containing both hydrophilic regions and hydrophobic regions will swell in water to form a hydrogel. However, this polymer has thermoplastic characteristics when in the solid state and can be melt-processed repeatedly. This is due to the lack of actual linkages between the polymer chains.

Melt-processable polymers are preferably prepared for molding through a processing step of extrusion 42 or 44, referring to Figure 1. A schematic of an extruder 72 is illustrated in Figure 3. Extrusion typically involves heating a polymer above the $T_F$ by the action of at least one rotating screw 74. The polymer and screw(s) are contained in a barrel 76 having a feed end 78 and an exit end 79, and the screw is powered by a motor 77. The barrel may be divided along its length into at least two zones, such as 80, 81, and 82, having controllable temperatures. Polymer is deposited into the system at the feed end and is melted above $T_F$. The rotating screw also serves to move the polymer through the barrel and out of the exit end, yielding an extrudate of the polymer. The exit end may consist of an orifice 84 or may be connected to an extrusion die.

Extruders useful for the present invention include the RC0250, available from RANDCASTLE EXTRUSION SYSTEMS INC., Cedar Grove, NJ. This extruder has a single stage 0.250 inch (0.635 cm) diameter (Ø0.250") screw, with 3 temperature control zones on the barrel and 1 temperature control zone on the die. To facilitate temperature control on the barrel of the extruder, there are 3 cooling fans on the barrel. Another extruder that is useful is the SHOP FLOOR EXTRUDER, available from WAYNE MACHINE AND DIE CO., Totowa, NJ. This extruder has a single 0.750 inch (1.905 cm) diameter (Ø0.750") screw which may be single or dual stage, with 3 temperature control zones on the barrel and 1 temperature control zone on the die. Three cooling fans on the barrel facilitate temperature control on the barrel of the extruder.

To achieve a more consistent flow rate, a melt pump (e.g. a positive displacement gear pump) can be used between the exit end of the extruder and the extrusion die with a dosed-loop pressure feedback. Also, to feed the extruder with polymer in the form of a powder, the use of a powder-feeder system is preferred. Examples of feeder systems that are useful include those available from MAGUIRE PRODUCTS, INC., Aston, PA. The rate of flow of polymer out of the extruder is preferably controlled by variation of the rotating speed of the screw.

Residual traces of solvent and moisture may be present in the polymer before processing. These impurities can lead to the formation of bubbles in the polymer melt. These bubbles are undesirable in the manufacture of ophthalmic lenses since a homogeneous, optically dear product is preferred. Bubbles can be eliminated through various methods, including drying the material thoroughly before extrusion and evacuating any gas out of the polymer melt. A combination of both methods may be used as well. A dryer system combined with the hopper 86 can be used to dry the material thoroughly before extrusion. Also, the extruder may be equipped with a two-stage screw design with a vented barrel. Gas in the polymer melt can also be eliminated by a venting mechanism used before the melt pump or the extrusion head. The gas vents can be connected to a vacuum source to allow the gas to evacuate the polymer melt.

A die design for wire formation is illustrated in Figure 4. This die 88 has a die face 91 and a controlled opening 90, which defines the shape of the extruded polymer. For example, the opening may be circular, elliptical, rectangular, or other shapes. The die may have an opening that yields a ribbon of polymer. A die intended for ribbon formation preferably has an adjustable lip design to provide for an adjustable thickness. This design allows for adjustments of the ribbon thickness during the extrusion process. The die may also have a controlled temperature. Adjustable lip dies are available, for example, from WAYNE MACHINE AND DIE CO., Totowa, NJ.

Referring to Figure 1, materials for reaction injection molding (RIM) are preferably prepared for molding through the processing steps of feeding the materials 46 and mixing and dispensing the mixed material 52. The RIM process is based on the chemical reaction of at least two components For example, a pre-polymer, which has isocyanate reactive groups can react with water to form a crosslinked network. Other reactions appropriate for RIM include various condensation polymerizations as well as ring-opening methathesis polymerization (ROMP) of cyclopentadiene. In the case of ROMP, the monomer feed is one component, and the catalyst is the other component. Systems based on pre-polymers are presently preferred. Pre-polymers generally require fewer reactions to occur to form the network, as compared to monomer-based systems. This can result in fewer byproducts of the overall reaction and can increase the reproducibility of the process.

The RIM process of the present invention preferably includes a hydrogel polyurethane prepared by a pre-polymer process. In this process, at least one polyol and/or polyamine and at least one polyisocyanate (and optionally a catalyst) are reacted first, to produce the pre-polymer. This pre-polymer is then reacted with at least one chain extender (and optionally a catalyst) to form a pre-polymer. Alternatively, a one-shot process may be employed in which at least one polyol and/or polyamine, at least one polyisocyanate, and at least one chain extender (and optionally a catalyst), are simultaneously mixed together to form a pre-polymer. Preferably, the pre-polymer is prepared from at least one multifunctional compound, at least one diisocyanate, and at least one diol. The polyurethane formulation reacts slowly but generates $CO_2$ as a reaction by-product, which can lead to foaming of the reaction. An amine-cure system, which reacts almost instantaneously can also be used, but may result in gelation of the mixture before the mixing is complete.

For example, the diol can be a polyalkylene oxide with a molecular weight below 7000; the diisocyanate can be an aliphatic isocyanate; and a tri-functional compound can also be present, preferably a triol, triamine, or a combination of both. These components can be formed into a pre-polymer when reacted with a catalyst such as dioctyl tin dilaurate. This prepolymer may have isocyanate end groups exclusively such that reaction with water, which functions as a chain extender, will form a crosslinked network.

In the method of the present invention, the extruded polymer may be in the form of a wire, and the sample may be in the form of a pellet. The pellet can have a length (L) and a diameter (D) in a L/D ratio of between 0.1 and 10.0, preferably between 0.2 and 5.0, more preferably about 1. The cutting may comprise slicing the wire with a moving knife at an opening of the extrusion die through which the wire is extruded such that the pellet remains adjacent to the knife; and the depositing may comprise moving the knife to a position proximate the first mold half, and pushing the pellet off the knife and into the first mold half. The pellet may further be supported in a groove in the knife, or alternatively by a set of tabs in the knife. The pellet may be pushed off the knife with an ejector pin, with an air burst, or a combination of these. The knife is preferably at a temperature between 120 °C below the $T_g$ and $T_D$. The knife may have a leading edge that is chamfered. The knife may have a pinching length that is less than 5 times the diameter of the pellet, preferably less than the diameter of the pellet, more preferably less than half the diameter of the pellet. The extrusion die may have a pinching length that is less than 5 times the diameter of the pellet, preferably less than the diameter of the pellet, more preferably less than half the diameter of the pellet It is preferred that all the polymer in the sample is incorporated into the lens. The mold parts may be squeezed together and then opened in less than 10 minutes, preferably less than 20 seconds. The mold parts may independently be at temperatures between 120 °C below the $T_g$ and $T_D$, preferably between 50 °C below the $T_g$ and 50 °C above the $T_F$. The polymer may be pumped from the extruder and to an extrusion die with a melt pump, preferably with a closed-loop pressure feedback control system coupled with the melt pump.

Referring to Figure 1, the invention may include a pelletizing step 48, for depositing an amount of a melt-processable polymer into a mold part 54. Referring to Figures 5-7, to create pellets 73 from an extruded wire 75, the polymer is preferably extruded in the vertical direction through a die having an opening with a circular cross section. A moving knife 94 then makes a cut at the surface of the die 91. The motion of the knife may be linear or may be rotational with respect to the die. An example of a pelletizing apparatus with multiple knives is illustrated in Figure 8, where the apparatus includes two knives 99 and 101. These knives are rotated about shaft 85 by the action of a gear assembly 87, powered by a motor 89. The distance between the two knives is 25 cm, and the knives rotate about the shaft at a speed of about 60 rpm. If this cutting occurs shortly after another cut, the sample of polymer, which is separated from the extrudate will be substantially cylindrical in shape. Because the polymer is near or above its flow temperature at the time of the cut, the shape of the sample, or pellet, may change. Thus, the cylinder of polymer may transform into an ellipsoid, a sphere, or other shapes.

The volume of a sample is preferably controlled and is determined by the sample length and the sample cross-section. The sample length can be controlled by the flow rate of the extrusion process as well as by the timing between two successive cuttings. The extrusion flow rate is controlled by the screw speed of the extruder and optionally by a melt pump. Control of the knife speed, and thus the time interval between successive cuts, can be accomplished by a servo-driven mechanism. The die diameter, which determines in part the cross-section or diameter of the sample, and the length of the pellet are preferably of a ratio such that the length-to-diameter ratio (UD) of the cylinder is between 0.1 and 10.0, preferably between 0.5 and 2.0, more preferably about 1. The extrudate can swell shortly after it exits the final extrusion orifice. This may depend in part on the die configuration used. The hole of the die is preferably slightly smaller than the desired extrudate diameter.

Referring again to Figure 7, the clearance 95 between the die face 91 and the knife face 97 is preferably as small as possible. The knife and die may be initially configured to have no clearance at all. The impact of the knife and die can then reduce the height of the knife face 97 and/or the die face 91 such that a small dearance is formed. The material used for the moving knife will also affect the adhesion of the cut pellet to the knife. It is presently preferred to use aluminum as the knife material. The cutting edge 96 is preferably very sharp, and is broken with a small chamfer such as 0.1 mm at 45° or smaller. The knife is kept at a temperature so as to avoid any formation of a skin on the sample at the interface between the polymer and the knife. This skin is a portion of the polymer sample, which is at least partially solidified, reducing the ability of the sample to be molded. It is preferred that the temperature of the knife is between 120 °C below $T_g$ and $T_D$, preferably between 100 °C below $T_g$ and $T_D$, preferably between 50 °C below $T_g$ and 50 °C above $T_F$.

The distance 93 between the extrusion hole 90 and the edge of the die 92 is the die pinching length as shown in Figure 7. Likewise, the distance 98 between the cutting edge 96 of the knife and the edge of the knife face 97 is the knife pinching length. Minimal pinching lengths are preferred in order to minimize the tab default The tab default is a small piece of polymer attached on the pellet due to the material being pinched between the knife and the extrusion head during the cutting. The pinching length is preferably less than 5 times the diameter of the pellet, more preferably less than the diameter of the pellet, and even more preferably less than half the diameter of the pellet

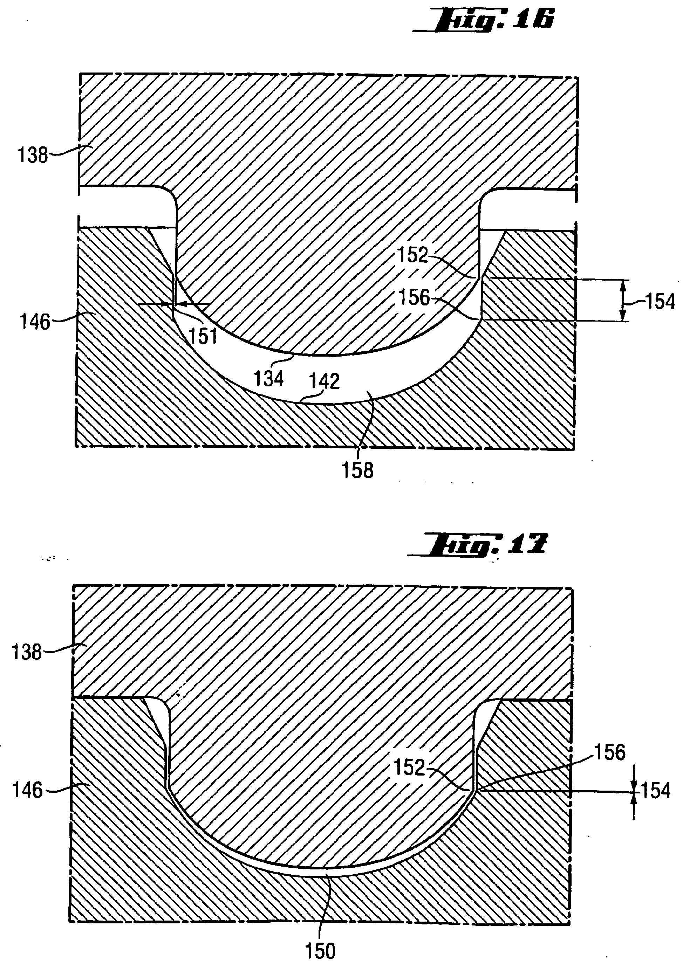

After the cut is complete, the pellet of polymer remains adjacent to the knife. The pellet may remain adjacent to the knife due to adhesion between the pellet and the knife. The knife may be equipped with a groove that is shaped to support the pellet. The knife may be equipped with tabs spaced to engage the pellet. In a preferred embodiment, as illustrated in Figures 5 and 6, the moving knife 94 is equipped with a groove 100. The knife is further equipped with an ejector pin 102, air nozzles, or both such that the pellet can be discharged from the knife. The knife delivers the pellet to a molding apparatus by discharging the pellet from the knife to mold part 125, as shown in Figure 3.

The extruded polymer of the present invention may alternatively be in the form of a ribbon, and the sample may be in the form of a disk. The disk may have a thickness between 50 microns and 5 mm, preferably between 100 and 300 microns. The cutting may comprise moving the ribbon between a die and a punch, with the die below the ribbon and the punch above the ribbon; sliding a moveable core in the punch down against the ribbon and into the die opening, the moveable core having a diameter less than the diameter of the die opening, thereby punching a sample out of the ribbon; and the depositing may comprise allowing the sample to drop through the die opening and into the first mold half. The cutting may further comprise damping the ribbon between the die and punch. The temperature of the ribbon is preferably between 120 °C below the $T_g$ of the polymer and $T_D$, preferably between 100 °C below the $T_g$ of the polymer and To, preferably between 50 °C below $T_g$ and 50 °C above $T_F$. The ribbon may be extruded in an environment where the temperature of the air is maintained between 50 °C below $T_g$ and 50°C above $T_F$. Heated air may be blown against the ribbon, wherein the temperature of the air is between 50 °C below $T_g$ and 50 °C above $T_F$. The polymer may be pumped from the extruder and to an extrusion die with a melt pump, preferably with a dosed-loop pressure feedback control system coupled with the melt pump.

Referring to Figure 9, in an eighth embodiment of the invention, there is a method for forming a disk from a polymer comprising: extruding a ribbon of melt-processable polymer through a die; damping the ribbon between a die and a punch, with the die below the ribbon and the punch above the ribbon; and sliding a moveable core in the punch down against the ribbon and into the die opening, the moveable core having a diameter less than the diameter of the die opening, thereby punching a disk out of the ribbon. The method may further comprise depositing the disk in a mold part. The depositing may comprise allowing the disk to drop through the die opening and into the mold part.

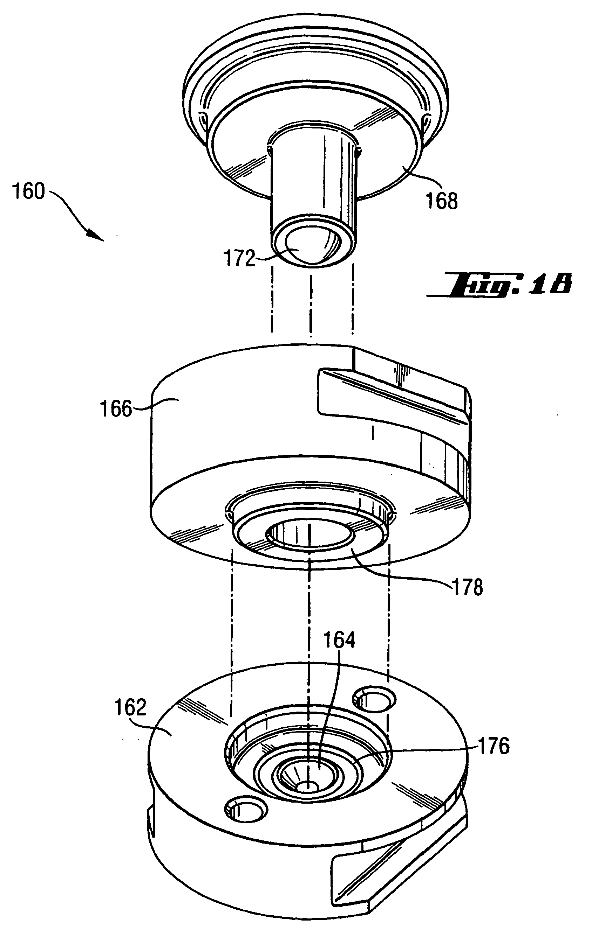

Referring to Figure 1, in a process useful for both compression molding and thermoforming, the invention may include the step of punching out a disk of polymer 50 to deposit an amount of polymer into a mold part 56. To accomplish this, the polymer can be extruded in the form of a ribbon. In the embodiments illustrated in Figures 9-11, a punch-die system 105 is employed to cut out disks 106 of material from the extruded ribbon 104. The temperatures of both the punch and the die are preferably controlled and may be the same or different. Referring to Figure 10, the punch-die system 105 may operate by pinching or damping the ribbon 104 between a die 108 beneath the ribbon and the punch assembly 107 above the ribbon. A movable core 103, equipped with spring washers 117, then moves out of the punch and through the die opening, cutting a disk of similar size and shape to the core. This disk can fall directly into the mold 126 or may be delivered to the mold. Alternatively, the core 111 (Figure 11) may move through the die opening such that the edges 113 can cut the ribbon without the ribbon being clamped.

Referring to Figure 9, it is preferred that the ribbon has a width greater than the width or diameter of the movable core. This allows for the ribbon to be kept substantially flat during the extrusion process as a nip roller 109 or other apparatus may be used to maintain tension on the extrudate. Preferably, the thickness of the ribbon is between 50 microns and 5 mm, more preferably between 100 and 300 microns. It is desirable for the temperature of the ribbon to be between about the $T_g$ and about the $T_F$ of the polymer at least until the disk is punched from the ribbon. This can be accomplished by controlling the temperature of the environment surrounding the ribbon. For example, the extruded ribbon can be kept in a heated chamber or hot-box until it is in close proximity to the punch-die system. Alternatively, a hot air blower 110 can force heated air against the ribbon between the extruder and the punch-die system.

The size of samples produced by the pelletizer or the disk punch-out system is preferably controlled and consistent. The desired size may be dictated by many factors including the size of the final product, the cost of the starting material, and the characteristics of the polymer. In some cases, it may be more straightforward to measure the consistency of the mass of sample produced rather than the volume. Since the volume is related to the mass, adjustments to the sample mass may be utilized to insure consistency of the volume. For disk shaped samples, it is preferred that the thickness of the disk is greater than the thickest part of the final lens shaped product. Also, disk shaped samples to be used for thermoforming preferably have a diameter greater than the diameter of the ophthalmic lens mold cavity, described below.

Referring to Figure 1, in a process useful for RIM, the invention may include a mixing and dispensing step 52 to deposit an amount of pre-polymer material into a mold part 58. The feed material components of a RIM process are mixed together as fluids. The components may themselves have low enough viscosities to be added into the reactor, or a solvent may be employed. The fluids can be mixed rapidly and then molded before the network formation is complete. A schematic of an apparatus 112 for this process is given in Figure 12. As the reaction between the two components advances, the viscosity of the partially reacted combined components increases. The speed of the reaction is determined, for example, by the concentrations of the components as well as by the temperature of the system. In order to achieve a final product, which is homogeneous, it is best to provide thorough mixing together of the two component streams 115 and 116. Factors that can adversely affect the quality of the mixing include viscosity differences between the components, low flow rates, and chemical compatibility (ie. miscibility).

Because of the small sample sizes associated with the molding of individual ophthalmic lenses, on the order of 25 mg, the flow rate of RIM material from the mixer 114 is preferably between 0.1 and 100 milliliters per minute (ml/min), preferably between 3 ml/min and 75 ml/min, more preferably about 25 ml/min. This is extremely low with respect to typical RIM applications, which have throughputs on the order of kilograms per hour.

The low flow rate used for ophthalmic lenses would typically result in a low Reynolds number ($R_e$) in a reactor, which would lead to poor mixing if a static mixer is employed. The Reynolds number is defined as

$$R_e = (velocity \times characteristic\ dimensions\ of\ flow)\ /\ kinematic\ viscosity.$$

The quality of mixing can be improved by decreasing the volume of the mixing chamber. This will also increase the homogeneity of the mixture and decrease the variability in the time spent in the mixer. A mixing volume between 0.1 ml and 10 ml is presently preferred.

The Reynolds number can be increased by generating turbulence within the flow. This can be achieved using a dynamic mixer that induces one or more moving or agitating elements. In one embodiment as illustrated in Figure 12, three pumps are employed. Two of the pumps 118 and 119 are used to feed the components to the mixing chamber where they are agitated. The resulting mixture is then metered and/or dispensed into a mold 127 using a third pump 120. The feeding could be done in an intermittent mode or in a continuous flow. In another embodiment, the materials are pumped to the mixing chamber in an intermittent mode and the mixture escapes the reservoir, without the assistance of the third pump, at the rate imposed by the feeding. It is preferred that the materials be dispensed with a very small shot size of about 10-50 microliters ($\mu$l) and with an accuracy of at least 90%, preferably at least 99%. The POSIDOT, manufactured by LIQUID CONTROL CORP, North Canton, OH, is an instrument that can be modified to achieve these processing parameters. It utilizes a dual chamber positive displacement pump in which the ratio of the components is insured by the ratio of the piston diameter. The combination of this system with a dynamic mixing chamber may optionally be combined with a metering pump to provide a useful apparatus.

The mixing component may have different configurations as illustrated in Figure 13. In Figure 13A, impellers 131 are mounted on a shaft 133, which extends through the length of the mixing chamber 135. The rotation of the impellers mixes the components 115 and 116 and also provides a net flow of the fluid towards the dispenser in the direction of arrow 139. In Figure 138, a rotating shaft 141 provides an effective shearing action provided the clearance between the shaft and the walls 143 of the chamber is sufficiently small. In Figure 13C and 13D, two impellers 147 and 148 are separately mounted perpendicular to the net flow of the fluid in the direction of arrow 149. The impellers rotate in opposite directions as illustrated by arrows 153 and 155. In this case, optimal mixing tends to occur at the center of the chamber, and the fluid is dispensed from this area.

The reactive fluid components may be maintained at different temperatures. For example, in a system, utilizing water as one component and a polyurethane pre-polymer as the other component, the water may be at 5-10 °C with the pre-polymer at 60-80 °C. This inhibits volatilization of the water and decreases the viscosity of the pre-polymer, insuring adequate mixing of the two components.

It is presently preferred to use a top driving mechanism to avoid the need for any dynamic seal on the chamber. This mechanism will also enable the application of vacuum to the mixing chamber in order to prohibit the introduction of air in the mixture and to remove any $CO_2$ generated by the chemical reaction. Excellent mixing was achieved using this system. Depending on the viscosity of the mixture, it may be preferred to use a pump to evacuate the mixture from the chamber.

Referring to Figure 1, after the material handling steps 34 of the process, the molding/shaping steps 36 are carried out. A variety of molding/shaping techniques may be used depending on the physical properties of the material being processed.

In the present invention, the first mold part is a female mold half, and the second mold part is a male mold half. The clearance between the mold parts may be less than 250 microns, preferably less than 20 microns, more preferably between 5 and 15 microns. The polymer may be hydrophilic and may form a hydrogel when hydrated. The polymer may contain latent crosslinking groups, and the temperature of the mold, the applied force, and the duration of the squeezing are preferably sufficient to crosslink the polymer. The temperature of the mold may be between 50 °C below $T_g$ and $T_D$; preferably the temperature of the mold is greater than the temperature at which the polymer is extruded. Alternatively, the temperature of the mold may be less than the temperature at which the polymer is extruded. The first volume may be between 3 and 100 microliters. The second volume may be between 3 and 200 microliters. The sample volume is preferably between 0.01% and 10% greater than the first volume, more preferably between 1% and 5% greater than the first volume.

The method may further comprise a cyclic process, the cyclic process comprising:
depositing a second sample of polymer in the mold; wherein the steps are repeated to mold a plurality of samples in the mold. The cyclic process may further comprise ensuring the mold is empty after removing the lens such that the second sample of polymer is deposited into an empty mold, and the ensuring may comprise cleaning the mold. The plurality of samples preferably has an average volume with a standard deviation, the standard deviation also referred to as the Greek letter sigma, represented by "σ". The average volume is preferably between the first volume plus σ and the second volume minus σ, more preferably between the first volume plus 2σ and the second volume minus 2σ, more preferably between the first volume plus 3σ and the second volume minus 3σ.

The method may further provide a plurality of samples. The plurality of samples preferably has an average volume with a standard deviation, the standard deviation also referred to as the Greek letter sigma, represented by "σ". The average volume is preferably between the first volume plus σ and the second volume minus σ, more preferably between the first volume plus 2σ and the second volume minus 2σ, more preferably between the first volume plus 3σ and the second volume minus 3σ.

Referring to Figure 1, a mold containing a pellet 54 or a disk 56 is compressed 60 to form a lens-like object. Compression molding is particularly useful for melt processable materials such as, for example, poly(methyl methacrylate) (PMMA) for hard lenses or suitable hydrogel melt processable materials for soft ophthalmic lenses. The polymer that is metered by either the hot face pelletizer 48 or the disk punch-out system 50 is deposited in the mold, preferably in the mold part which forms the front curve of the lens. The mold is then closed and compressed with a predetermined force, forming the polymer into the shape of a lens. The mold is maintained at an appropriate temperature to allow the material to solidify. After the molding is complete, the mold is opened and the lens is taken out of the mold. This process can be repeated, and the mold can be reused.

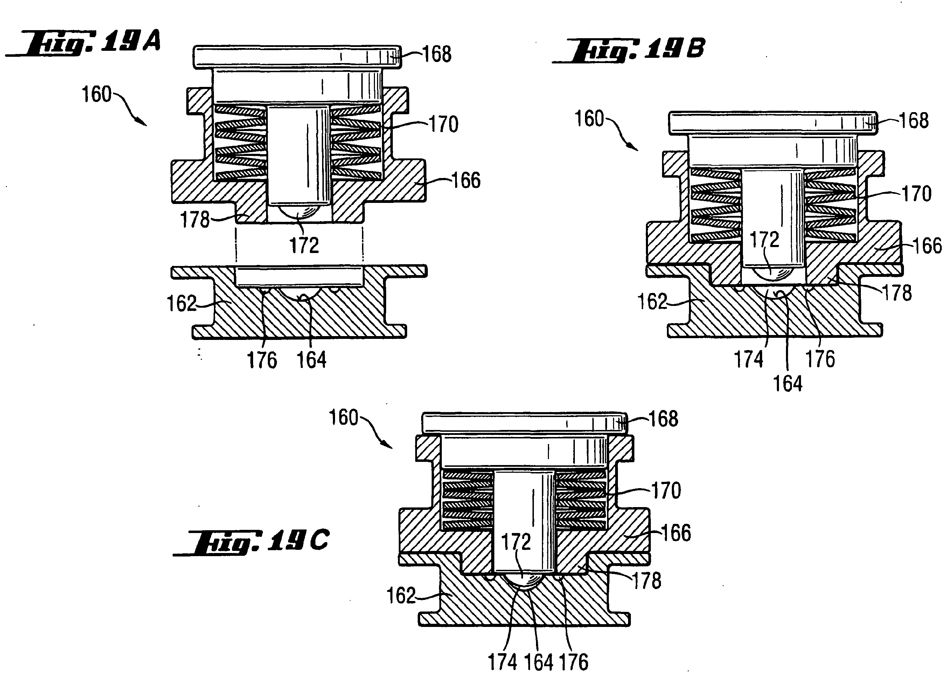

A mold assembly 130, which is useful for compression molding of ophthalmic lenses is illustrated in Figures 14-15. In general, the assembly functions in a manner similar to a piston and cylinder. The assembly has a first mold part and a second mold part, each of which can be constructed of more than one component. In this embodiment, the male mold part 132 has a curved molding surface 134, which defines the back curve of an ophthalmic lens. The curved molding surface 142 of the female mold part 140 thus defines the front curve of the lens. Both mold parts have a holder 136 or 144 and an insert 138 or 146. The insert is removably secured to the holder by a retaining ring 137 or 145, which is secured to the holder by four screws. Since the power of the ophthalmic lens is defined primarily by the shape of the front and back curves, ophthalmic lenses of different powers can be molded using the same general mold assembly through the use of at least one different insert, preferably the front curve insert 146.

For conventional injection molding, the physical cavity is defined by the mold itself, and the material is forced into the cavity. The injection molding process thus utilizes a fixed volume to form a sample that can have a variable weight.

In contrast to this fixed volume mold cavity, compression molding employed by the present invention uses a variable volume mold cavity. A certain amount of material is segregated and forced into a specific shape, resulting in a process, which utilizes a variable volume to form a sample that has a fixed weight. The volume varies due to the normal process variation in the amount of material segregated and placed into the mold. One measure of this process variation is the standard deviation ($\sigma$) of the average amount of material dispensed in the mold.

Referring to Figure 16 and 17, the mold can vary between a minimum volume 150 and a maximum volume 158, defined by the displacement 154 of the edge 152 of the curve of the back curve insert relative to the edge 156 of the curve of the front curve insert. It is preferred that the minimum volume 150, where there is no displacement 154, is not achieved during the molding process. This would force the end planes of the inserts together under pressure and could damage the inserts as well as the assembly.

It is preferred that the volume of the polymer sample, when at a temperature below $T_g$, is between the minimum volume and the maximum volume of the cavity. For a number of samples having an average volume (when at a temperature below $T_g$) with a standard deviation $\sigma$, the average volume is preferably between the minimum volume plus $\sigma$ and the maximum volume minus $\sigma$. More preferably, the average volume is between the minimum volume plus $2\sigma$ and the maximum volume minus $2\sigma$. Even more preferably, the average volume is between the minimum volume plus $3\sigma$ and the maximum volume minus $3\sigma$. The tolerances on the segregated weight will induce a variation in the mold volume. For an ophthalmic lens, this volume variation will translate into a thickness variation as the volume variation can be described as the surface area multiplied by the thickness. This variation on the thickness will induce some variation in the lens optical power and is preferably controlled. A high precision (0.5-1.0 % variation) in the size of samples can be attained by the techniques described above. For ophthalmic lenses, the small weight, typically about 25 mg, of the product leads to small sample design. Likewise, the small material consumption rate of 1200 ophthalmic lenses/min (about 1.8 kg/hr) leads to the use of a very small diameter extruder and a melt pump. Alternatively, a larger material consumption rate could be accommodated in many ways, including utilizing more molds and recirculating or wasting excess extrudate.

Alternatively, the mold halves may be mated to form a mold cavity having a specific volume. That is, the displacement 154 may be controlled, and the resulting force on the sample may be varied. In this embodiment, it is also desirable for the volume of the mold cavity to be such that the end planes of the inserts do not contact.

The mold inserts are designed to have a clearance 151 between them such that gas can be vented from the mold cavity, but preferably small enough that the polymer in the mold cavity cannot escape when subjected to the appropriate temperature and force for molding. Clearance around the entire circumference is ensured by a proper centering of the mold parts relative to each other. Initial centering is achieved by aligning the male insert 138 relative to the female retaining ring 145. More precise centering is achieved by aligning the two curved molding surfaces. Additional centering steps may be also employed. Each mold is maintained at a specific temperature using a temperature control system, such as an electrical heater or a hot oil circulating system.

Referring to Figure 1, reaction injection molding (RIM) also uses a compressed mold 60 to form the mixture 58 into a lens-like object. As employed in the present invention, RIM utilizes multiple reactive fluid components that react chemically when they contact each other to form a hydrophilic polymer. This reaction progresses until a crosslinked network is formed and gelation occurs. The rate of the reaction offers a reasonable reaction time before gelation to allow for mixing, metering, dispensing, and shaping of the material.

All components are mixed together to begin the reaction. This mixture is maintained for a specified period of time at a temperature capable of initiating a reaction between the components. This initial reaction converts the fluid components into a fluid pre-polymer material. The fluid pre-polymer material is then metered and/or dispensed into the mold, preferably in the mold part, which forms the front curve of the lens. The mold is then dosed and compressed, forming the disk into the shape of a lens. The mold is maintained at an appropriate temperature to allow the reaction to continue so that the material solidifies. Preferably the molding is complete in less than 500 seconds, after which the mold is opened and the lens is taken out of the mold. This process can be repeated, and the mold can be reused. The mold as described for compression molding can be used for RIM of ophthalmic lenses. A tighter mold clearance on the final centering may be necessary as lower viscosity materials could pass through the venting clearance.

Thermoforming generally utilizes materials, which are useful for compression molding. Referring to Figure 1, the polymer that is metered by the disk punch-out system 50 is directly deposited in the mold 56, preferably in the mold part, which forms the front curve of the lens. The disk is then molded 60 into a lens-like object. The thermoforming process relies on the disk being clamped on its annular outermost periphery while the lens is being shaped. This clamping procedure requires that the diameter of the sample is greater than the diameter of the final ophthalmic lens in the unhydrated, or dry, state. The resulting lens is attached to a rim or flange that is preferably removed. This removal may occur automatically in the mold or may occur as a separate operation.

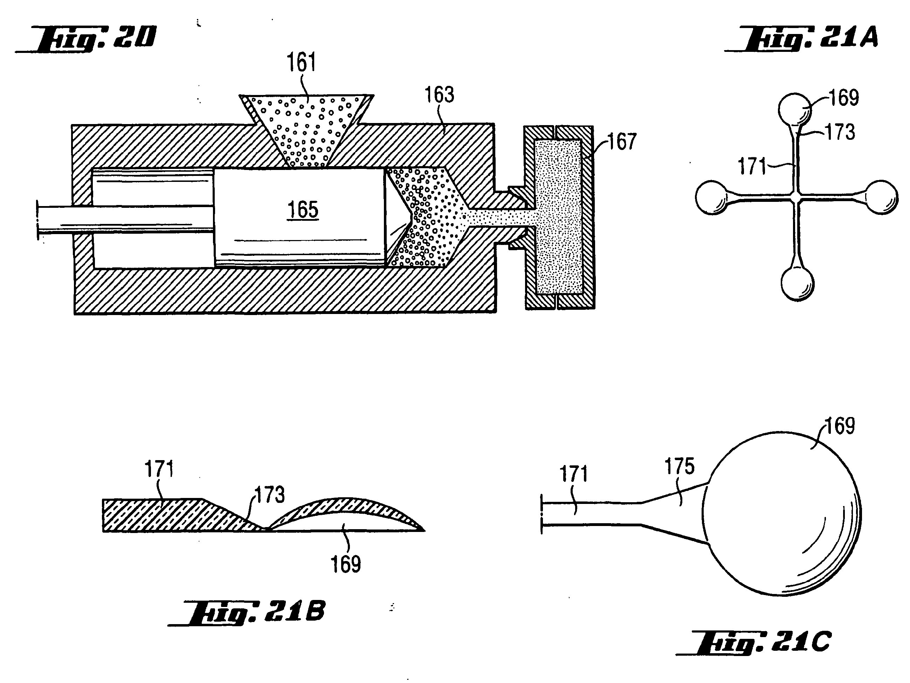

An example of a mold assembly 160 useful for thermoforming ophthalmic lenses is given in Figures 18-19. This mold assembly has a mold pin 168, and bottom mold 162, a set of spring washers 170, and a top mold 166. The mold pin 168 defines a back curve molding surface 172 for the ophthalmic lens and functions as a component of the male mold part 178 in combination with the top mold 166. The bottom mold 162 functions as the female mold part and defines the front curve 164 of the ophthalmic lens. The bottom mold orients with the mold pin to define an ophthalmic lens mold space 174 and mates with the top mold to form a flange cavity 176. The spring washers 170 situated in the space between the mold pin and the top mold permit the mold pin to apply a force to the sample in the ophthalmic lens cavity while keeping the top and bottom molds stationary once contact is established. A given mold pin and bottom mold may be interchanged with other mold pins and bottom molds having different curvatures to provide for lenses having different powers.

In this process, a disk of material, which has been punched-out directly drops, or is deposited, into the bottom mold part. The top mold part comes in contact with the disk around its annular periphery and keeps moving down, thereby compressing or "pinching" the disk. Once the predetermined force or displacement is obtained, the mold pin is moved to contact and deform the disk. In the final position, the disk is shaped on both sides. Vacuum can be used on at least one side of the disk to assist in the shaping. The mold is maintained at an appropriate temperature to allow the material to solidify. Preferably the molding is complete in less than 500 seconds, after which the mold is opened and the lens is taken out of the mold. This process can be repeated, and the mold can be reused. The peripheral rim is removed from the lens. The mold design could include some automatic punch out system to detach the lens from its outer ring.

The materials described for compression molding and thermoforming can also be formed into ophthalmic lenses through injection molding. The material for injection molding is metered directly from the melt. Referring to Figure 20 for example, polymer 161 at a temperature above $T_F$ may be fed from an extruder to an injector 163 and then forced into a mold 167 by a plunger 165. An example of an injection-molding machine, which is useful, is the BOY 12M available from BOY MACHINERY, Exton, PA.

Referring to Figure 21, the mold for injection molding may include multiple ophthalmic lens mold cavities 169 connected to a runner system 171 through a gate 173. Polymer is injected through runners to a gate to fill the cavities, and any material, which solidifies in the gate, is removed from the lens. The mold is preferably at a temperature such that the polymer remains at a temperature above $T_F$ while the cavities are being filled. The temperature of the mold may then be changed as necessary to allow the polymer to solidify or crosslink.

The injection molding of a lens requires some attention to the placement of the gates and possible discomfort to the lens-wearer due to the vestige in the final lens. There are a number of advanced approaches, which can be developed to obviate this effect, including hot runner molding. Post-processing operations are preferably limited to de-gating and edge polishing. Thermoset materials are particularly useful, as the hot mold process condition contribute to decrease the viscosity and ease the filling.

Factors affecting the quality and reproducibility of lenses produced by injection molding include injection pressure, packing pressure, pressure gradients across the lens, temperature gradients, air traps, shot size, and speed of injection. A high injection pressure is needed due to the small thickness of the lens. A rapid injection speed can decrease the molding pressure needed, and the mold may be equipped with high rigidity platens to help sustain the high pressure, which develops during injection. A fan gate design 175 is presently preferred, as is venting of the mold. Ejection is preferably only on the cold runner just behind the gate, and the use of hot runners is limited to feed a cold runner system to be able to insure the ejection of the lens. A strong mold design can be utilized to avoid flash from the mold.

An alternate process involves the use of a coining process to reduce the molding pressures of injection and packing. This process uses a movable plunger unit, which also functions as part of the mold. Polymer, which solidifies in the gate, must be trimmed.

Referring to Figure 1, the material that is compressed in the mold 60 is preferably solidified into a lens-like object before the mold is opened 62. The solidification behavior of the samples in all of these processing steps is determined by the applied pressure, the temperature of the mold, and the molding time. For compression molding, thermoforming, and injection molding, the preferred temperature of the mold depends on the characteristics of the polymer. Thermoplastics solidify when their temperature is lowered sufficiently below $T_g$.

Thermosets, including polymers containing latent crosslinking groups, form solid networks when a sufficient amount of crosslinking has occurred. If this crosslinking is induced thermally, the temperature of the mold may be greater than $T_F$. Alternatively, the temperature may be maintained at or below $T_F$ if the crosslinking reaction is sufficiently slow. That is, the polymer can be processed for a certain amount of time at $T_F$ before crosslinking occurs. Lower temperatures will then necessitate longer molding times. If crosslinking is induced photochemically, the mold temperature may not be a significant factor in the speed of solidification. For photochemical crosslinking, at least one of the mold parts is transparent to radiation having the wavelength necessary to cause the reaction to occur.

Network formation in RIM is also affected by time and temperature. For example, the fluid components may be dispensed into the reactor at one temperature, the reactor may mix the components at a second temperature, and the mold may be maintained at a third temperature. Also, the temperatures of the fluid components may be the same or may be different. It is preferred that the temperature of the reactor is high enough to allow reaction between the components, yet low enough to provide sufficient time for mixing, dispensing, and shaping the pre-polymer. It is preferred that the temperature of the mold is high enough to provide for rapid network formation and short cycle times, yet low enough to allow the sample to be shaped before solidification.

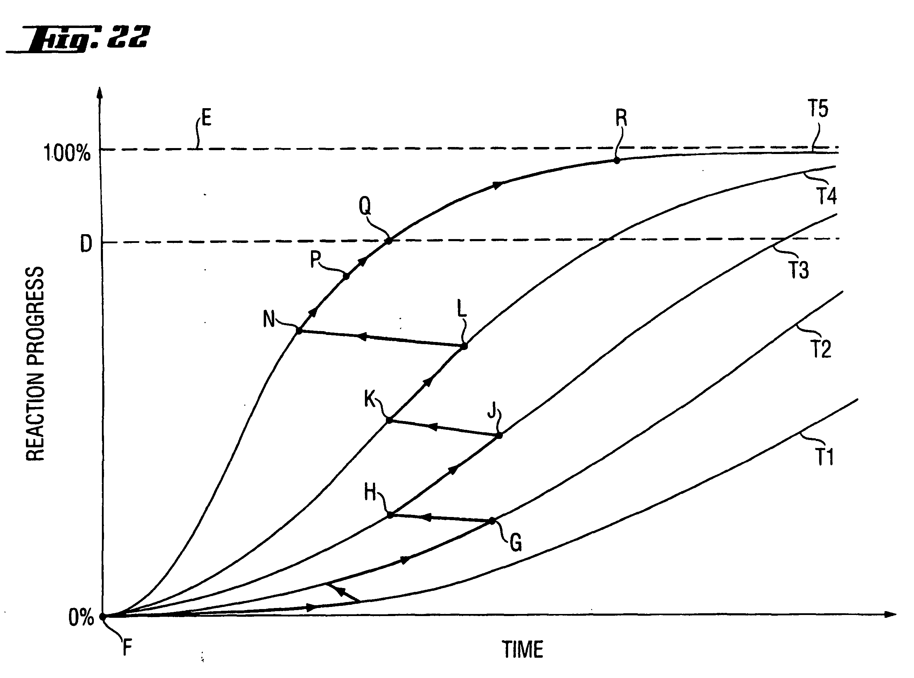

A diagram of a crosslinking process is given in Figure 22. The percentage reaction can refer to the reaction between the feed components for RIM or can refer to the reaction between crosslinking sites in a thermoset material. For different temperatures T1, T2, T3, T4 and T5 (T1 < T2 < T3 < T4 < T5), there are different rates for the crosslinking reaction. When the reaction has progressed to percentage D of the full reaction E, the material is a crosslinked network such that it will not dissolve in a solvent. Thus. D can be referred to as the gel point of the reaction. Higher reaction temperatures lead to faster crosslinking. The temperatures T1 and T2 may be the temperatures at which the feed components are stored and/or fed to the processing apparatus. These temperatures may be different for different feed components, as illustrated in Figure 22. Alternatively, these temperatures may be the same (ie. for a single component melt processable polymer). Thus, some reaction may occur between points F and G as the material is at the initial temperature. The temperature T3 may be the flowing temperature $T_F$ or may be the temperature of a RIM mixer. The arrow between points G and H symbolizes the increase in temperature experienced by the material. The reaction now proceeds more quickly from H to J as the material is kept at T3. It is the behavior of the material at T3 that allows the material to be handled and dispensed into the mold. For RIM, the feed components react as they are mixed, but they do not reach the gel point. For the extrusion of thermosets, the polymer Is flexible enough to flow and to be dispensed as samples, but full crosslinking does not occur during the processing. The arrow between points J and K symbolizes the increase in temperature from the handling temperature T3 to the temperature of the receiving mold part T4. Point K is the beginning of the filling of the mold, and point L is the end of the filling of the mold. The temperature of the material then increases to T5 (point L to point N) when the other mold part contacts the material as the mold is dosed. The reaction then proceeds from point N to point P at T5, where point P symbolizes the end of the dosing of the mold. It is important that the mold is filled and dosed such that the material is formed into the desired shape before the gel point D is reached at point Q. This is referred to as the shaping time. After the material has become a network, the material may be kept in the mold at T5 in order to allow the reaction to be completed at point R.

Referring to Figure 1, the ejection of the lens from the mold 62 permits the reuse of the mold, thus contributing to the overall efficiency of the process. It is preferred to eject the lens without damaging the lens or the mold. The ejection process is also associated with the geometrical definition and the quality of the ophthalmic lens edge.

Several techniques are useful for the ejection. For example, vacuum suction cups can be used to release the lens from the mold and optionally to transport the lens to another location. Mold release agents such as food grade silicon can be applied to the mold before or after the molding process. The mold may be treated to reduce adhesion to the lens, such as by coating with nickel-TEFLON. The mold can be made of a porous material such as SLS, a sintered material, or porous steel. The lens can then be separated from the mold by a compressed air blown through the mold and/or vacuum applied to one part of the mold. The mold can be made of a hyper-elastic material such as NiTinol such that the mold can be flexed. The mold may be subjected to ultrasonic vibration. The lens can be formed with an annular ring, which can be pushed away from the mold by a movable ring in the mold part. This annular ring can endure damage since it is removed from the lens itself by laser cutting or edge polishing. Combinations of any of these techniques can be used.

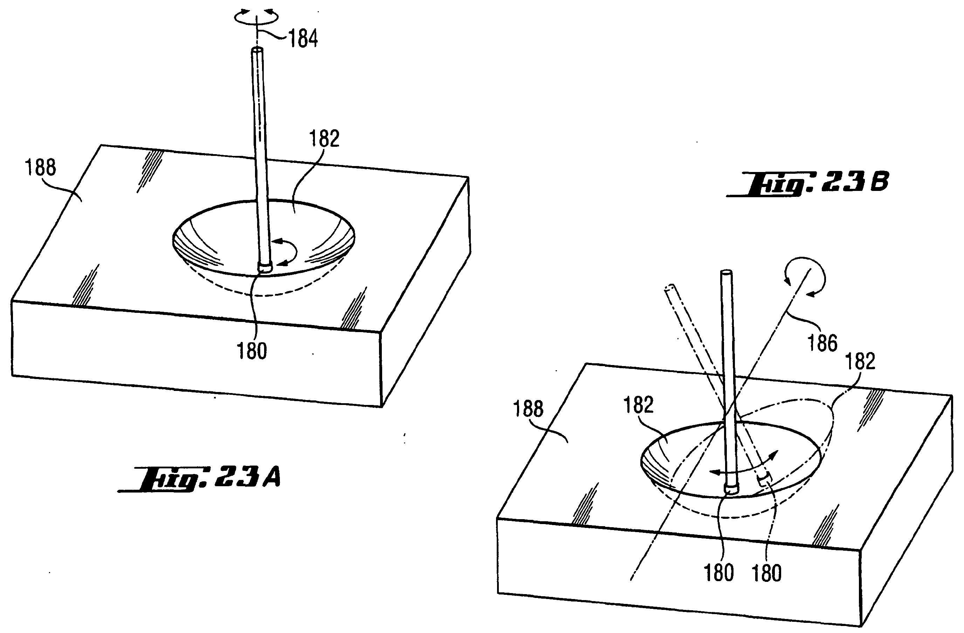

The presently preferred method for ejection, illustrated in Figure 23, utilizes a silicone pad 180 to apply a small force to the lens 182 contained in the mold 188. The lens can then be rotated about its optical axis 184 or can be pivoted about an axis perpendicular to the optical axis, such as 186. This motion helps to eliminate the vacuum existing between the lens and the mold. A suction cup can then be used to handle the lens.

Referring to Figures 1 and 2, the lens like object removed from the mold 62 can be subjected to a combination of steps in the post-processing phase 40. These steps can include printing on the lens 64, for example to provide coloring on the lens. The lens can also be packaged for distribution or sale 66, and this packaging may occur before, during or after the steps of product storage/hydration 68 and sterilization 70. Alternatively, the lens-like object can be hydrated in the mold to facilitate ejection of the lens. Inspection steps 65, 67, 69, and 71 may be carried out in the order shown in Figure 2. Some of these steps may be unnecessary or may be carried out during other post-processing steps. For an ophthalmic lens to be used as intraocular lens, other components, for example at least one haptic, may be added to the lens before it is packaged. A haptic is an appendage to the lens that provides for increased stability of the intraocular lens within the eye.

Automation of the manufacturing process provides for increased efficiency and reproducibility. The molding apparatus can be for example a turning carousel that supports multiple stations. Each station is actuated by cam-driven mechanisms and controls one mold. The sample, whether an extruded pellet and extruded disk, or a fluid pre-polymer material, is deposited into the mold part. The mold is dosed and maintained at a temperature to allow for the solidification of the polymer. The mold is opened and the lens is removed.

An example of an automated system contains 64 cavities and can produce 1200 parts/min. The setup allows one person to maintain up to 4 machines simultaneously. Machine uptime ranges from 92-99%. A mold cycle time of 3.5 seconds provides 0.75 seconds for opening, ejection, and filling. Machines useful for automation of ophthalmic lens manufacturing preferably allow for features including, for example, a closed-loop mold temperature control system for both sides of the mold, up to at least 250 °C on each mold side; cooling of the supporting fixture between the mold and the machinery; a closed loop material feeding temperature control system; an adjustable dosing force up to 10 tons, which can be sustained on a continuous basis; an adjustable closing time; precise alignment of mold parts before closing of +/- 0.05 mm; and connection with the dispensing and feeding apparatus desaibed above.

EXAMPLES

Materials

Except as noted, all materials were synthesized, purified, and characterized following procedures generally described in WO 01/05578, entitled Thermoformable Ophthalmic Lens, to Chapoy et al., filed July 14, 2000. 2-(N-ethylperfluorooctanesulfonamido) ethyl acrylate (FX-13) was supplied by 3M Corporation of St. Paul, Minnesota, USA and was recrystallized twice from methanol before use. The initiators Vazo®64 (also known as AIBN) and Vazo®52, were obtained from E.I. du Pont de Nemours & Co., Wilmington, Delaware. The following materials were used as received from Aldrich Chemical: N,N-dimethyl acrylamide (DMA), glycidyl methacrylate (GMA), octadecyl methacrylate (ODA), butoxy ethacrylate (BEA), mono-acryloxypropyl terminated poly(dimethylsiloxane) having a molecular weight of approximately 5,000 (DPMS-MA), polyethyleneglycol methyl ether acrylate having a molecular weight of approximately 1,100 (PEGME-MA), tetrahydrofuran (THF), and toluene.

DSC measurements were made with a Dupont 910 Differential Scanning Calorimeter. The DSC cell was flushed with nitrogen during experiments. Samples were encapsulated in aluminum pans. The instrument was calibrated with an indium standard and an empty aluminum pan was used as a reference. The observed onset of melting for the indium was 156.6 °C +/- 0.5 °C. $T_g$ values were taken as inflection points in the thermograms (2nd or higher scan number).

Weight average molecular weight ($M_w$) and number average molecular weight ($M_n$) were determined with a Perkin Elmer ISS 200 HPLC/SEC. The ISS 200 was equipped with a UV-VIS detector and a Model 250 pump. Ultra styragel columns ($1 \times 10^4$, $1 \times 10^3$, $5 \times 10^2$ A) connected in series were used with THF as the eluent at a flow rate of 1 mL/min. Narrow molecular weight poly(methyl methacrylate) standards were used.

Example No. 1

A thermoplastic material was used which had been made as follows. To a 500-mL four-neck cylinder flask, equipped with mechanical stirring, reflux condenser, and nitrogen inlet, was charged toluene (180 mL), DMA (64.7 wt%), FX-13 (20 wt%), and DPMS-MA (15 wt%) with Vazo64 (0.3 wt%). The total mass of monomers was 30 g. The solution was purged with nitrogen for 10 minutes, and then was polymerized with thermal initiation at 60 °C for 20 hours. The polymer was characterized as having a $T_g$ of 104°C and a weight average molecular weight of 118,000. The thermoplastic material was held in a compression mold similar to those illustrated in Figures 14-17, having a mold cavity diameter of 14 mm. The temperature of the mold was 175°C, and the applied force was 2 tons. The mold was opened after 5 minutes, with the lens-like object adhered to the base curve. Hydration of the object for 5 minutes produced a contact lens.

Example No. 2

A thermoplastic material was used which had been made as described in Example 1, except using the following monomer proportions: DMA (49.7 wt%), FX-13 (20 wt%), and DPMS-MA (30 wt%). The polymer was characterized as having a $T_g$ of 95 °C and a weight average molecular weight of 149,000.

The thermoplastic material was held in a compression mold having a mold cavity diameter of 14 mm. The temperature of the mold was 175 °C, and the material was softened in the mold for 5 minutes. A force of 1 ton was applied for 6 minutes, followed by hydration of the object for 5 minutes to produce a contact lens.

Example No. 3

A thermoplastic material was used which had been made as follows. To a 500-mL four-neck cylinder flask, equipped with mechanical stirring, reflux condenser, and nitrogen inlet, was charged toluene (150 mL), dimethylacrylamide (DMA) (54.5 wt%), FX-13 (20.0 wt%), DPMS-MA (15.0 wt%), and PEGME-MA (10 wt%) with Vazo52 (0.5 wt%). The total mass of monomers was 30 g. The solution was purged with nitrogen for 20 minutes, and then was polymerized with thermal initiation at 45 °C for 20 hours. The branch copolymer was collected and dried. The polymer was characterized as having a $T_g$ of 65 °C and a weight average molecular weight of 190,000.

The thermoplastic material (20 mg) was held in a compression mold having a mold cavity diameter of 10 mm. The temperature of the mold was 150 °C, and the material was softened in the mold for 30 minutes. The mold was dosed, but no force was applied for 5 minutes. A force of 0.2 metric ton was then applied for 15 minutes. The mold was then cooled in an ice bath. The lens-like object was ejected after hydration for 2 hours with no release agent present.

Example No. 4

The thermoplastic material of Example 3 (20 mg) was held in a compression mold having a mold cavity diameter of 10 mm. The temperature of the mold was 160 °C, and the material was softened in the mold for 45 minutes. The mold was dosed, but no force was applied for 5 minutes. A force of 0.2 metric ton was then applied for 15 minutes. The mold was then cooled in an ice bath. The brittle lens-like object was ejected with no release agent present by forcibly opening the mold.

Example No. 5

A thermoset material was used which had been made as follows. A round bottom flask was charged with DMA (54.5 wt%), FX-13 (20 wt%), GMA (10.0 wt%), ODA (15 wt%), and Vazo52 (0.5 wt%), with toluene as the solvent. After the monomers dissolved, the flask was lowered into a 55 °C water bath and purged with nitrogen. The reaction mixture was then stirred for about 24 hours under nitrogen. The solvent was removed from the reaction mixture by rotary evaporation. The resulting sample was diluted with 75 mL of THF. The viscous solution was poured into stirred hexanes, and the polymer precipitated. The precipitated polymer was separated from the hexanes and dried in a vacuum oven (65-70 °C, pressure was less than or equal to 0.1 mm of Hg) for at least 24 hours. The polymer was characterized as having a $T_g$ of 77 °C and a weight average molecular weight of 126,000.

A disk of this thermoset material having a diameter of 3 cm was heated to 170 °C. The hot disk was then placed in a thermoforming mold having a lens cavity diameter of 10 mm. The temperature of the mold was 170 °C, and the mold was dosed, but no force was applied for 1.30 minutes. A force of 1 ton was then applied for 1.00 minute, followed by a force of 6 tons for 0.7 minutes, followed by a force of 8 tons for 15 minutes. After 18 total minutes of molding, the temperature of the mold was lowered to 15.5 °C. The lens-like object was damaged when the mold was opened.

Example No. 6

A disk of thermoset material from Example 5 having a diameter of 10 mm was held in a compression mold having a mold cavity diameter of 10 mm. The temperature of the mold was 160 °C, and the material was softened in the mold for 5 minutes. The mold was dosed, and a force of 2.5 tons was then applied for 3 minutes to form lens-like object. Some material overflowed the mold cavity to form a flash. This flash would be trimmed from the lens as part of the finishing operations.

Example No. 7

A disk of thermoset material from Example 5 having a diameter of 6.4 mm was held in a compression mold having a mold cavity diameter of 10 mm. The temperature of the mold was 160 °C, and the material was softened in the mold for 2.5 minutes. The mold was dosed, and a force of 2.5 tons was then applied for 5 minutes. Some material overflowed the mold cavity since the disk was not properly centered in the mold. A yellowish color in the lens-like object indicated that some oxidation had occurred.

Example No. 8

Molding experiments were run using reactor grade polypropylene (PP) to test the material handling and molding capabilities of the equipment. The material was not dried before processing. The extruder, die, mold and rotating knife were heated according to the settings listed in the tables below. The extruder was the RANDCASTLE RC0250. Both compression mold halves were fixed to their support, and the top half was made floating with respect to the centering plane. The mold was closed and the halves were centered with respect to each other. The top half was then securely fastened to its support. Once the heat was equilibrated, the extruder was started, and the cutting system was activated to deposit pellets in the mold. The knife and the ejector pin each had a diameter of 4.2 mm, and the knife was rotated at 60 rpm. Tables 1-2 desaibe the operating conditions for the molding experiments. Lens-like objects were produced in each run.

TABLE 1

| Run No.: | 8-A | 8-B | 8-C | 8-D | 8-E | 8-F | 8-G | 8-H | 8-I |
|---|---|---|---|---|---|---|---|---|---|
| EXTRUDER | | | | | | | | | |
| Zone I (°C) | 177 | 177 | 177 | 177 | 177 | 177 | 177 | 177 | 177 |
| Zone II (°C) | 188 | 188 | 188 | 188 | 188 | 188 | 188 | 188 | 188 |
| Zone III (°C) | 193 | 193 | 193 | 193 | 193 | 193 | 193 | 193 | 193 |
| Zone IV (°C) | 193 | 193 | 193 | 193 | 193 | 193 | 193 | 193 | 193 |
| Screw speed (rpm) | 100 | 43 | 43 | 43 | 43 | 45 | 45 | 50 | 55 |
| TEMPERATURES | | | | | | | | | |
| Die (°C) | 193 | 193 | 193 | 193 | 193 | 193 | 193 | 193 | 193 |
| BC mold (°C) | 50 | 27.2 | 60 | 32.3 | 55 | 60 | 60 | 60 | 60 |
| FC mold (°C) | 50 | 29.3 | 60 | 60 | 45 | 45 | 45 | 45 | 45 |
| Knife | 60 | 60 | 60 | 60 | 60 | 60 | 60 | 60 | 60 |
| Low pressure (bar) | 30 | 30 | 30 | 30 | 30 | 30 | 30 | 30 | 30 |
| High pressure (bar) | 30 | 30 | 30 | 30 | 30 | 30 | 30 | 30 | 30 |

TABLE 2

| Run No.: | 8-J | 8-K | 8-L | 8-M | 8-N | 8-O | 8-P | 8-Q | 8-R |
|---|---|---|---|---|---|---|---|---|---|
| EXTRUDER | | | | | | | | | |
| Zone I(°C) | 177 | 177 | 177 | 177 | 177 | 177 | 177 | 177 | 177 |
| Zone II (°C) | 188 | 188 | 188 | 188 | 188 | 188 | 188 | 188 | 188 |
| Zone III (°C) | 193 | 193 | 193 | 193 | 193 | 193 | 193 | 193 | 193 |
| Zone IV (°C) | 193 | 193 | 193 | 193 | 193 | 193 | 193 | 193 | 193 |
| Screw speed (rpm) | 60 | 55 | 70 | 75 | 80 | 80 | 80 | 80 | 78 |
| TEMPERATURES | | | | | | | | | |
| Die (°C) | 193 | 193 | 193 | 193 | 193 | 193 | 193 | 193 | 193 |
| BC mold (°C) | 60 | 100 | 60 | 60 | 60 | 47 | 60 | 60 | 60 |
| FC mold (°C) | 50 | 50 | 60 | 60 | 60 | 55 | 60 | 60 | 60 |
| Knife | 60 | 60 | 60 | 60 | 60 | 60 | 60 | 60 | 60 |
| Low pressure (bar) | 30 | 30 | 30 | 30 | 30 | 30 | 30 | 30 | 30 |
| High pressure (bar) | 30 | 80 | 80 | 80 | 80 | 80 | 30 | 50 | 75 |

Example No. 9

Molding experiments were run using an optical quality grade thermoset material, which had been made according to the method of Example 5, except with a portion of the ODA replaced with BEA. The material was dried before processing in a hopper-dryer made by DRY AIR COMPANY. Drying was at a temperature of 55 °C for 2 days, using a fine screen as a support. Material was then added to the hopper of an extruder in loadings of at least 0.75 kg. The extruder, die, mold and rotating knife were heated according to the settings listed in the tables below. The extruder was the RANDCASTLE RC0250. Both compression mold halves were fixed to their support, and the top half was made floating with respect to the centering plane. The mold was closed and the halves were centered with respect to each other. The top half was then securely fastened to its support. Once the heat was equilibrated, the extruder was started, and the cutting system was activated to deposit pellets in the mold. The knife and the ejector pin each had a diameter of 4.2 mm, and the knife was rotated at 60 rpm. Tables 3-4 describe the operating conditions for the molding experiments. Lens-like objects were produced in each run, and these products could be hydrated to form contact lenses.

TABLE 3

| Run No.: | 9-A | 9-B | 9-C | 9-D | 9-E | 9-F | 9-G | 9-H | 9-I |
|---|---|---|---|---|---|---|---|---|---|
| EXTRUDER | | | | | | | | | |
| Zone I (°C) | 93 | 93 | 93 | 93 | 121 | 149 | 149 | 149 | 149 |
| Zone II (°C) | 149 | 149 | 149 | 149 | 163 | 177 | 191 | 177 | 177 |
| Zone III (°C) | 205 | 193 | 193 | 193 | 191 | 193 | 205 | 191 | 191 |
| Zone IV (°C) | 232 | 218 | 218 | 232 | 193 | 205 | 205 | 205 | 205 |
| Screw speed (rpm) | 75 | 75 | 75 | 75 | 25 | 25 | 25 | 25 | 50 |
| TEMPERATURES | | | | | | | | | |
| Die (°C) | 218 | 218 | 218 | 218 | 193 | 193 | 193 | 193 | 193 |
| BC mold (°C) | 27 | 27 | 27 | 27 | 60 | 60 | 60 | 60 | 60 |
| FC mold (°C) | 27 | 27 | 27 | 27 | 60 | 60 | 60 | 60 | 60 |
| Knife | 60 | 60 | 60 | 60 | 60 | 60 | 60 | 60 | 60 |
| Low pressure (bar) | 30 | 30 | 30 | 30 | 30 | 30 | 30 | 30 | 30 |
| High pressure (bar) | 30 | 30 | 30 | 30 | 30 | 30 | 30 | 30 | 30 |
| DIAMETERS | | | | | | | | | |
| Die (mm) | 2 | 2 | 2 | 2 | 4.2 | 4.2 | 4.2 | 4.2 | 4.2 |
| Knife (mm) | 1.8 | 1.8 | 1.8 | 1.8 | 4.2 | 4.2 | 4.2 | 4.2 | 4.2 |
| Extrudate (mm) | 2.5 | 2.5 | 2.5 | 2.5 | - | - | - | - | - |

TABLE 4

| Run No.: | 9-J | 9-K | 9-L | 9-M | 9-N | 9-O |
|---|---|---|---|---|---|---|
| EXTRUDER | | | | | | |
| Zone I (°C) | 121 | 121 | 121 | 121 | 121 | 121 |
| Zone II (°C) | 149 | 149 | 149 | 149 | 149 | 149 |
| Zone III (°C) | 160 | 160 | 160 | 160 | 160 | 160 |
| Zone IV (°C) | 163 | 166 | 191 | 177 | 177 | 191 |
| Screw speed (rpm) | 50 | 50 | 50 | 75 | 100 | 80 |
| TEMPERATURES | | | | | | |
| Die (°C) | 193 | 193 | 193 | 193 | 193 | 193 |
| BC mold (°C) | 60 | 60 | 60 | 60 | 60 | 60 |
| FC mold (°C) | 60 | 60 | 60 | 60 | 60 | 60 |
| Knife | 60 | 60 | 60 | 60 | 60 | 60 |
| Low pressure (bar) | 30 | 30 | 30 | 30 | 30 | 30 |
| High pressure (bar) | 30 | 30 | 30 | 30 | 30 | 30 |
| DIAMETERS | | | | | | |
| Die (mm) | 4.2 | 4.2 | 4.2 | 4.2 | 4.2 | 4.2 |
| Knife (mm) | 4.2 | 4.2 | 4.2 | 4.2 | 4.2 | 4.2 |

Example No. 10

Molding experiments were run using an optical quality grade thermoplastic material of Example 3. The material was dried before processing in a hopper-dryer made by DRY AIR COMPANY. Drying was at a temperature of 55 °C for 2 days, using a fine screen as a support. Material was then added to the hopper of an extruder in loadings of at least 0.75 kg. The extruder, die, mold and rotating knife were heated according to the settings listed in the tables below. The extruder was the RANDCASTLE RC0250. Both compression mold halves were fixed to their support, and the top half was made floating with respect to the centering plane. The mold was closed and the halves were centered with respect to each other. The top half was then securely fastened to its support. Once the heat was equilibrated, the extruder was started, and the cutting system was activated to deposit pellets in the mold. The knife and the ejector pin each had a diameter of 4.2 mm, and the knife was rotated at 60 rpm. Tables 5-6 describe the operating conditions for the molding experiments. Lens-like objects were produced in each run, and these products could be hydrated to form contact lenses.

TABLE 5

| Run No.: | 10-A | 10-B | 10-C | 10-D | 10-E | 10-F | 10-G | 10-H | 10-I |
|---|---|---|---|---|---|---|---|---|---|
| EXTRUDER | | | | | | | | | |
| Zone I (°C) | 149 | 149 | 138 | 138 | 138 | 138 | 138 | 138 | 138 |
| Zone II (°C) | 160 | 160 | 149 | 149 | 149 | 149 | 149 | 149 | 149 |
| Zone III (°C) | 177 | 177 | 163 | 177 | 191 | 191 | 191 | 191 | 191 |
| Zone IV (°C) | 177 | 177 | 177 | 177 | 191 | 191 | 191 | 191 | 191 |
| Screw speed (rpm) | 25 | 100 | 100 | 50 | 100 | 100 | 100 | 100 | 100 |
| TEMPERATURES | | | | | | | | | |
| Die (°C) | 175 | 175 | 200 | 175 | 200 | 200 | 200 | 200 | 200 |
| BC mold (°C) | 100 | 100 | 100 | 100 | 100 | 100 | 30 | 25 | 27 |
| FC mold (°C) | 90 | 90 | 90 | 90 | 90 | 90 | 30 | 25 | 27 |
| Knife | 60 | 60 | 60 | 60 | 60 | 60 | 60 | 60 | 60 |
| Low pressure (bar) | 20 | 20 | 20 | 20 | 20 | 30 | 30 | 30 | 30 |
| High pressure (bar) | 30 | 30 | 30 | 30 | 30 | 30 | 30 | 30 | 30 |
| DIAMETERS | | | | | | | | | |
| Die (mm) | 2 | 2 | 2 | 2 | 2 | 2 | 2 | 2 | 2 |
| Knife (mm) | 1.8 | 1.8 | 1.8 | 1.8 | 1.8 | 1.8 | 1.8 | 1.8 | 1.8 |
| Extrudate (mm) | - | - | - | - | 2.5 | 2.5 | 2.5 | 2.5 | 2.5 |

TABLE 6

| Run No.: | 10-J | 10-K | 10-L | 10-M |
|---|---|---|---|---|
| EXTRUDER | | | | |
| Zone I (°F) | 138 | 149 | 149 | 163 |
| Zone II (°F) | 160 | 171 | 177 | 193 |
| Zone III (°F) | 182 | 193 | 193 | 218 |
| Zone IV (°F) | 182 | 193 | 200 | 232 |
| Screw speed (rpm) | 100 | 100 | 100 | 50 |
| TEMPERATURES | | | | |
| Die (°C) | 200 | 200 | 200 | 250 |
| BC mold (°C) | 27 | 27 | 27 | 27 |
| FC mold (°C) | 27 | 27 | 27 | 27 |
| Knife | 60 | 60 | 60 | 60 |
| Low pressure (bar) | 30 | 30 | 30 | 30 |
| High pressure (bar) | 30 | 30 | 30 | 30 |

Table continued

| DIAMETERS | | | | |
|---|---|---|---|---|
| Die (mm) | 2 | 2 | 2 | 2 |
| Knife (mm) | 1.8 | 1.8 | 1.8 | 1.8 |
| Extrudate (mm) | 2.5 | 2.5 | 2.5 | 2.5 |

Example No. 11

100 g of polyethylene oxide having a molecular weight of 1500 (CARBOWAX 1450) is reacted with 12.86 g of isophorone diisocyanate and 16.16 g of LUXATE$^{tm}$ HT 2000 (isocyanurate trimer of hexamethylene diisocyanate) at 70°C until the free isocyanate has decreased to the theoretical value of 2.21%. This prepolymer has a viscosity of less than 10000 cps at 50 °C. The prepolymer mixes readily with water at that temperature. It is then mixed with the appropriate amount of water in a LIQUID CONTROLS CORPORATION POSI-DOT$^{tm}$ dispenser/mixer, and the appropriate amount of the mixture is delivered into an ophthalmic lens mold. The mixture cures into a hydrated polymer in the shape of an contact lens, having a water content of 74%.

**Claims**

1.  A method for making a soft hydrogel ophthalmic lens comprising:

    (a) providing a first mold part (125) having a front curve molding surface (140) for the ophthalmic lens;
    (b) providing a second mold part (132) having a back curve molding surface for the ophthalmic lens, the mold parts adapted to mate together to form a mold cavity in the shape of an ophthalmic lens having a variable volume (150, 158) at least between a first volume (150) and a second volume, the second volume (158) being greater than the first volume; (c) extruding a melt-processable polymer, the polymer having a glass transition temperature ($T_g$), a flow temperature ($T_F$), and a degradation temperature ($T_D$);
    (d) cutting a sample from the extruded polymer, the sample having a volume between the first volume (150) and the second volume (158);
    (e) depositing the sample in the first mold part (125);
    (f) moving the mold parts together to form a mold cavity with the back curve molding surface contacting the sample;
    (g) squeezing the mold parts together with a predetermined force, wherein the mold parts have a clearance such that gas can be vented from the mold cavity;
    (h) allowing the polymer to solidify and form a lens;
    (i) opening the mold;
    (j) removing the lens from the mold;
    (k) hydrating the ophthalmic lens; and
    (I) packaging the ophthalmic lens.

2.  The method for making an ophthalmic lens according to claim 1, wherein the extruded polymer is in form of a wire (75)and wherein the sample is in form of a pellet (73) having a length (L) and a diameter (D) in a UD ratio of between 0.1 and 10.0, preferably between 0.2 and 5.0, more preferably about 1.

3.  The method for making an ophthalmic lens according to claim 2, wherein:

    (a) the cutting comprises slicing the wire (75) with a moving knife (94) at an opening of the extrusion die through which the wire is extruded such that the pellet remains adjacent to the knife; and
    (b) the depositing comprises moving the knife to a position proximate the first mold half, and pushing the pellet off the knife and into the first mold half.

4.  The method for making an ophthalmic lens according to claim 3, wherein the pellet (73) is supported in a groove (100) in the knife.

5.  The method for making an ophthalmic lens according to claim 3, wherein the pellet is supported in by a set of tabs in the knife.

6. The method for making an ophthalmic lens according to claim 3, wherein the pellet is pushed off the knife with a means selected from an ejector pin (102), an air burst and a combination of these.

7. The method for making an ophthalmic lens according to claim 3, wherein the knife is at a temperature between 120 °C below the $T_g$ and $T_D$.

8. The method for making an ophthalmic lens according to claim 3, wherein the knife has a leading edge that is chamfered.

9. The method for making an ophthalmic lens according to claim 3, wherein the knife has a pinching length that is less than 5 times the diameter of the pellet, preferably less than the diameter of the pellet, more preferably less than half the diameter of the pellet.

10. The method for making an ophthalmic lens according to claim 5, wherein the extrusion die has a pinching length that is less than 5 times the diameter of the pellet, preferably less than the diameter of the pellet, more preferably less than half the diameter of the pellet.

11. The method for making an ophthalmic lens according to claim 1, wherein all the polymer in the sample is incorporated into the lens.

12. The method for making an ophthalmic lens according to claim 1, wherein the mold parts are squeezed together and then opened in less than 10 minutes, preferably in less than 20 seconds.

13. The method for making an ophthalmic lens according to claim 12, wherein the mold parts are independently at temperatures between 120 °C below the $T_g$ and $T_D$ of the polymer, preferably between 50 °C below the $T_g$ and 50 °C above $T_F$.

14. The method for making an ophthalmic lens according to claim 1, wherein the extruded polymer is in the form of a ribbon (104).

15. The method of making an ophthalmic lens according to claim 14, wherein the sample is in the form of a disk (106).

16. The method for making an ophthalmic lens according to claim 15, wherein the disk (106) has a thickness between 50 microns and 5 mm, preferably between 100 and 300 microns.

17. The method for making an ophthalmic lens according to claim 14, wherein:

(a) the cutting comprises moving the ribbon between a die and a punch, with the die below the ribbon and the punch above the ribbon (107); sliding a moveable core in the punch down against the ribbon and into the die opening, the moveable core having a diameter less than the diameter of the die opening, thereby punching a sample out of the ribbon; and
(b) the depositing comprises allowing the sample to drop through the die opening and into the first mold half (126).

18. The method for making an ophthalmic lens according to claim 14, wherein the cutting further comprises clamping the ribbon between the die and punch.

19. The method for making an ophthalmic lens according to claim 14, wherein the temperature of the ribbon is between 120 °C below the $T_g$ of the polymer and $T_D$, preferably between 100 °C below the $T_g$ of the polymer and $T_D$, more preferably between 50 °C below the $T_g$ of the polymer and 50 °C above $T_F$.

20. The method for making an ophthalmic lens according to claim 14, wherein the ribbon is extruded in an environment where the temperature of the air is maintained between 50 °C below the $T_g$ of the polymer and 50 °C above $T_F$.

21. The method for making an ophthalmic lens according to claim 14, further comprising blowing heated air (110) against the ribbon, wherein the temperature of the air is between 50 °C below the $T_g$ of the polymer and 50 °C above $T_F$.

22. The method for making an ophthalmic lens according to claim 1, further comprising pumping the polymer from the extruder and to an extrusion die with a melt pump.

23. The method for making an ophthalmic lens according to claim 22, wherein a closed-loop pressure feedback control system is coupled with the melt pump.

24. The method for making an ophthalmic lens according to claim 1, wherein the first mold part is a female mold half, and the second mold part is a male mold half.

25. The method for molding an ophthalmic lens according to claim 1, wherein the clearance between the mold parts is less than 250 microns, preferably less than 20 microns, more preferably between 5 and 15 microns.

26. The method of molding an ophthalmic lens according to claim 1, wherein the polymer contains latent crosslinking groups.

27. The method of molding an ophthalmic lens according to claim 26, wherein the temperature of the mold, the applied force, and the duration of the squeezing are sufficient to crosslink the polymer.

28. The method of molding an ophthalmic lens according to claim 26, wherein the temperature of the mold is between 50 °C below the $T_g$ and $T_D$.

29. The method of molding an ophthalmic lens according to claim 26, wherein the temperature of the mold is greater than the temperature at which the polymer is extruded.

30. The method of molding an ophthalmic lens according to claim 1, wherein the temperature of the mold is less than the temperature at which the polymer is extruded.

31. The method for molding an ophthalmic lens according to claim 1, wherein the first volume (150) is between 3 and 100 microliters.

32. The method for molding an ophthalmic lens according to claim 1, wherein the second volume (158) is between 3 and 200 microliters.

33. The method for molding an ophthalmic lens according to claim 1, wherein the sample volume is between 0.01% and 10% greater than the first volume, preferably between 1% and 5% greater than the first volume.

34. The method for making an ophthalmic lens according to claim 1, further comprising a cyclic process, the cyclic process comprising: depositing a second sample of polymer in the mold; wherein the steps are repeated to mold a plurality of samples in the mold.

35. The method for making an ophthalmic lens according to claim 34, wherein the cyclic process further comprises ensuring the mold is empty after removing the lens such that the second sample of polymer is deposited into an empty mold.

36. The method for making an ophthalmic lens according to claim 36, wherein the ensuring comprises cleaning the mold.

37. The method for making an ophthalmic lens according to claim 1, wherein a plurality of samples are provided.

38. The method for making an ophthalmic lens according to claim 34 or 37, wherein the plurality of samples has an average volume with a standard deviation σ.

39. The method for making an ophthalmic lens according to claim 38, wherein the average volume is between the first volume plus σ and the second volume minus σ, preferably between the first volume plus 2σ and the second volume minus 2σ, more preferably between the first volume plus 3σ and the second volume minus 3σ.

40. The method for making an ophthalmic lens according to claim 1, wherein the ophthalmic lens is a contact lens or an intraocular lens.

**EP 1 226 924 B1**

**Patentansprüche**

1. Verfahren zur Herstellung einer weichen ophthalmischen Hydrogellinse, umfassend:

   (a) Bereitstellen eines ersten Formteils (125) mit einer Frontkrümmungs-Formoberfläche (140) für die ophthalmische Linse;
   (b) Bereitstellen eines zweiten Formteils (132) mit einer Rückkrümmungs-Formoberfläche für die ophthalmische Linse, wobei die Formteile dazu ausgelegt sind, miteinander in Eingriff zu kommen, um einen Formhohlraum in Form einer ophthalmischen Linse mit einem variablen Volumen (150, 158) zumindest zwischen einem ersten Volumen (150) und einem zweiten Volumen zu bilden, wobei das zweite Volumen (158) größer ist als das erste Volumen;
   (c) Extrudieren eines schmelzverarbeitbaren Polymers, wobei das Polymer eine Glasübergangstemperatur ($T_g$), eine Fließtemperatur ($T_F$) und eine Zersetzungstemperatur ($T_D$) aufweist;
   (d) Schneiden einer Probe von dem extrudierten Polymer, wobei die Probe ein Volumen zwischen dem ersten Volumen (150) und dem zweiten Volumen (158) aufweist;
   (e) Ablegen der Probe im ersten Formteil (125);
   (f) Zusammenbewegen der Formteile, um einen Formhohlraum zu bilden, wobei die Rückkrümmungs-Formoberfläche die Probe berührt;
   (g) Zusammenquetschen der Formteile mit einer vorbestimmten Kraft, wobei die Formteile einen Zwischenraum aufweisen, sodass Gas aus dem Formhohlraum entlüftet werden kann;
   (h) Verfestigenlassen des Polymers und Ausbilden einer Linse;
   (i) Öffnen der Form;
   (j) Entnehmen der Linse aus der Form;
   (k) Hydratisieren der ophthalmischen Linse; und
   (l) Verpacken der ophthalmischen Linse.

2. Verfahren zur Herstellung einer ophthalmischen Linse nach Anspruch 1, wobei das extrudierte Polymer in Form eines Strangs (75) vorliegt und wobei die Probe in Form eines Pellets (73) mit einer Länge (L) und einem Durchmesser (D) in einem L/D-Verhältnis zwischen 0,1 und 10,0, vorzugsweise zwischen 0,2 und 5,0, bevorzugter von etwa 1, vorliegt.

3. Verfahren zur Herstellung einer ophthalmischen Linse nach Anspruch 2, wobei:

   (a) das Schneiden das Abschneiden des Strangs (75) mit einem sich bewegenden Messer (94) an einer Öffnung der Extrusionsdüse umfasst, durch die der Strang extrudiert wird, sodass das Pellet benachbart zum Messer bleibt; und
   (b) das Ablegen das Bewegen des Messers in eine Position nahe der ersten Formhälfte und das Wegschieben des Pellets vom Messer und in die erste Formhälfte umfasst.

4. Verfahren zur Herstellung einer ophthalmischen Linse nach Anspruch 3, wobei das Pellet (73) in einer Nut (100) im Messer abgestützt wird.

5. Verfahren zur Herstellung einer ophthalmischen Linse nach Anspruch 3, wobei das Pellet durch einen Satz von Vorsprüngen im Messer abgestützt wird.

6. Verfahren zur Herstellung einer ophthalmischen Linse nach Anspruch 3, wobei das Pellet vom Messer mit einem Mittel weggeschoben wird, das aus einem Auswurfstift (102), einem Luftstoß und einer Kombination von diesen ausgewählt ist.

7. Verfahren zur Herstellung einer ophthalmischen Linse nach Anspruch 3, wobei sich das Messer bei einer Temperatur zwischen 120°C unterhalb der $T_g$ und $T_D$ befindet.

8. Verfahren zur Herstellung einer ophthalmischen Linse nach Anspruch 3, wobei das Messer eine Vorderkante aufweist, die abgeschrägt ist.

9. Verfahren zur Herstellung einer ophthalmischen Linse nach Anspruch 3, wobei das Messer eine Klemmlänge aufweist, die geringer als das Fünffache des Durchmessers des Pellets, vorzugsweise geringer als der Durchmesser des Pellets, bevorzugter geringer als der halbe Durchmesser des Pellets, ist.

**10.** Verfahren zur Herstellung einer ophthalmischen Linse nach Anspruch 5, wobei die Extrusionsdüse eine Klemmlänge aufweist, die geringer als das Fünffache des Durchmessers des Pellets, vorzugsweise geringer als der Durchmesser des Pellets, bevorzugter geringer als der halbe Durchmesser des Pellets, ist.

**11.** Verfahren zur Herstellung einer ophthalmischen Linse nach Anspruch 1, wobei das ganze Polymer in der Probe in die Linse eingearbeitet wird.

**12.** Verfahren zur Herstellung einer ophthalmischen Linse nach Anspruch 1, wobei die Formteile zusammengequetscht werden und dann in weniger als 10 Minuten, vorzugsweise in weniger als 20 Sekunden, geöffnet werden.

**13.** Verfahren zur Herstellung einer ophthalmischen Linse nach Anspruch 12, wobei die Formteile unabhängig bei Temperaturen zwischen 120°C unterhalb der $T_g$ und $T_D$ des Polymers, vorzugsweise zwischen 50°C unterhalb der $T_g$ und 50°C oberhalb $T_F$ liegen.

**14.** Verfahren zur Herstellung einer ophthalmischen Linse nach Anspruch 1, wobei das extrudierte Polymer in Form eines Bandes (104) vorliegt.

**15.** Verfahren zur Herstellung einer ophthalmischen Linse nach Anspruch 14, wobei die Probe in Form einer Scheibe (106) vorliegt.

**16.** Verfahren zur Herstellung einer ophthalmischen Linse nach Anspruch 15, wobei die Scheibe (106) eine Dicke zwischen 50 Mikrometer und 5 mm, vorzugsweise zwischen 100 und 300 Mikrometer, aufweist.

**17.** Verfahren zur Herstellung einer ophthalmischen Linse nach Anspruch 14; wobei:

(a) das Schneiden das Bewegen des Bandes zwischen einer Matrize und einer Stanze, wobei die Matrize unterhalb des Bandes und die Stanze über dem Band (107) liegt; das Verschieben eines beweglichen Kerns in der Stanze gegen das Band nach unten und in die Matrizenöffnung umfasst, wobei der bewegliche Kern einen Durchmesser aufweist, der geringer als der Durchmesser der Matrizenöffnung ist, wodurch eine Probe aus dem Band ausgestanzt wird; und
(b) das Ablegen das Fallenlassen der Probe durch die Matrizenöffnung und in die erste Formhälfte (126) umfasst.

**18.** Verfahren zur Herstellung einer ophthalmischen Linse nach Anspruch 14, wobei das Schneiden weiterhin das Festklemmen des Bandes zwischen der Matrize und der Stanze umfasst.

**19.** Verfahren zur Herstellung einer ophthalmischen Linse nach Anspruch 14, wobei die Temperatur des Bandes zwischen 120°C unterhalb der $T_g$ des Polymers und $T_D$, vorzugsweise zwischen 100°C unterhalb der $T_g$ des Polymers und $T_D$, bevorzugter zwischen 50°C unterhalb der $T_g$ des Polymers und 50°C oberhalb $T_F$, liegt.

**20.** Verfahren zur Herstellung einer ophthalmischen Linse nach Anspruch 14, wobei das Band in einer Umgebung extrudiert wird, in der die Temperatur der Luft zwischen 50°C unterhalb der $T_g$ des Polymers und 50°C oberhalb $T_F$ gehalten wird.

**21.** Verfahren zur Herstellung einer ophthalmischen Linse nach Anspruch 14, welches weiterhin das Blasen von erhitzter Luft (110) gegen das Band umfasst, wobei die Temperatur der Luft zwischen 50°C unterhalb der $T_g$ des Polymers und 50°C oberhalb $T_F$ liegt.

**22.** Verfahren zur Herstellung einer ophthalmischen Linse nach Anspruch 1, welches weiterhin das Pumpen des Polymers vom Extruder und zu einer Extrusionsdüse mit einer Schmelzpumpe umfasst.

**23.** Verfahren zur Herstellung einer ophthalmischen Linse nach Anspruch 22, wobei ein Druckrückkopplungs-Regelsystem in geschlossener Schleife mit der Schmelzpumpe gekoppelt ist.

**24.** Verfahren zur Herstellung einer ophthalmischen Linse nach Anspruch 1, wobei der erste Formteil eine Matrizenhälfte ist und der zweite Formteil eine Patrizenhälfte ist.

**25.** Verfahren zum Formen einer ophthalmischen Linse nach Anspruch 1, wobei der Zwischenraum zwischen den Formteilen geringer als 250 Mikrometer, vorzugsweise geringer als 20 Mikrometer, bevorzugter zwischen 5 und 15 Mikrometer, ist.

26. Verfahren zum Formen einer ophthalmischen Linse nach Anspruch 1, wobei das Polymer latente Vernetzungsgruppen enthält.

27. Verfahren zum Formen einer ophthalmischen Linse nach Anspruch 26, wobei die Temperatur der Form, die aufgebrachte Kraft und die Dauer des Quetschens ausreichen, um das Polymer zu vernetzen.

28. Verfahren zum Formen einer ophthalmischen Linse nach Anspruch 26, wobei die Temperatur der Form zwischen 50°C unterhalb der $T_g$ und $T_D$ liegt.

29. Verfahren zum Formen einer ophthalmischen Linse nach Anspruch 26, wobei die Temperatur der Form größer als die Temperatur ist, bei der das Polymer extrudiert wird.

30. Verfahren zum Formen einer ophthalmischen Linse nach Anspruch 1, wobei die Temperatur der Form geringer als die Temperatur ist, bei der das Polymer extrudiert wird.

31. Verfahren zum Formen einer ophthalmischen Linse nach Anspruch 1, wobei das erste Volumen (150) zwischen 3 und 100 Mikrolitern liegt.

32. Verfahren zum Formen einer ophthalmischen Linse nach Anspruch 1, wobei das zweite Volumen (158) zwischen 3 und 200 Mikrolitern liegt.

33. Verfahren zum Formen einer ophthalmischen Linse nach Anspruch 1, wobei das Probenvolumen zwischen 0,01 % und 10 % größer als das erste Volumen, vorzugsweise zwischen 1 % und 5 % größer als das erste Volumen, ist.

34. Verfahren zur Herstellung einer ophthalmischen Linse nach Anspruch 1, welches weiterhin einen zyklischen Vorgang umfasst, wobei der zyklische Vorgang umfasst: Ablegen einer zweiten Probe von Polymer in der Form; wobei die Schritte wiederholt werden, um eine Vielzahl von Proben in der Form zu formen.

35. Verfahren zur Herstellung einer ophthalmischen Linse nach Anspruch 34, wobei der zyklische Vorgang weiterhin das Sicherstellen, dass die Form leer ist, nach dem Entnehmen der Linse umfasst, sodass die zweite Probe von Polymer in einer leeren Form abgelegt wird.

36. Verfahren zur Herstellung einer ophthalmischen Linse nach Anspruch 35, wobei das Sicherstellen das Reinigen der Form umfasst.

37. Verfahren zur Herstellung einer ophthalmischen Linse nach Anspruch 1, wobei eine Vielzahl von Proben bereitgestellt wird.

38. Verfahren zur Herstellung einer ophthalmischen Linse nach Anspruch 34 oder 37, wobei die Vielzahl von Proben ein mittleres Volumen mit einer Standardabweichung σ aufweist.

39. Verfahren zur Herstellung einer ophthalmischen Linse nach Anspruch 38, wobei das mittlere Volumen zwischen dem ersten Volumen plus σ und dem zweiten Volumen minus σ, vorzugsweise zwischen dem ersten Volumen plus 2σ und dem zweiten Volumen minus 2σ, bevorzugter zwischen dem ersten Volumen plus 3σ und dem zweiten Volumen minus 3σ, liegt.

40. Verfahren zur Herstellung einer ophthalmischen Linse nach Anspruch 1, wobei die ophthalmische Linse eine Kontaktlinse oder eine Intraokularlinse ist.

**Revendications**

1. Procédé de fabrication d'une lentille ophtalmique souple en hydrogel , comprenant :

> (a) la fourniture d'une première partie de moule (125) ayant une surface de moulage frontale incurvée (140) pour la lentille ophtalmique ;

(b) la fourniture d'une seconde partie de moule (132) ayant une surface de moulage de fond incurvée pour la lentille ophtalmique, les parties du moule étant adaptées pour s'assembler l'une avec l'autre et former une cavité de moule ayant la forme d'une lentille ophtalmique, présentant un volume variable (150, 158) au moins entre un premier volume (150) et un second volume, le second volume (158) étant supérieur au premier volume ;

(c) l'extrusion d'un polymère pouvant être traité à l'état fondu, le polymère ayant une température de transition vitreuse ($T_g$), une température d'écoulement ($T_F$), et une température de dégradation ($T_D$) ;

(d) la découpe d'un échantillon à partir du polymère extrudé, l'échantillon présentant un volume compris entre le premier volume (150) et le second volume (158) ;

(e) le dépôt de l'échantillon dans la première partie de moule (125) ;

(f) le déplacement conjoint des parties du moule pour former une cavité de moule, la surface de moulage de fond incurvée étant en contact avec l'échantillon ;

(g) la compression conjointe des parties du moule selon une force prédéterminée, les parties du moule présentant un espace tel que le gaz puisse être purgé de la cavité de moule ;

(h) le fait de laisser le polymère se solidifier et former une lentille ;

(i) l'ouverture du moule ;

(j) le retrait de la lentille du moule ;

(k) l'hydratation de la lentille ophtalmique ; et

(l) le conditionnement de la lentille ophtalmique.

2. Procédé de fabrication d'une lentille ophtalmique selon la revendication 1, dans lequel le polymère extrudé est sous forme d'un fil (75) et dans lequel l'échantillon est sous forme d'une pastille (73) ayant une longueur (L) et un diamètre (D), dans un rapport L/D compris entre 0,1 et 10,0, de préférence entre 0,2 et 5,0, plus préférablement d'environ 1.

3. Procédé de fabrication d'une lentille ophtalmique selon la revendication 2, dans lequel :

(a) la découpe comprend l'épissage du fil (75) avec un couteau mobile (94) à un orifice de la matrice d'extrusion à travers lequel le fil est extrudé, de telle sorte que la pastille reste en position adjacente au couteau ; et

(b) le dépôt comprend le déplacement du couteau en une position proche de la première moitié de moule, et la poussée de la pastille hors du couteau et dans la première moitié de moule.

4. Procédé de fabrication d'une lentille ophtalmique selon la revendication 3, dans lequel la pastille (73) est supportée dans une rainure (100) du couteau.

5. Procédé de préparation d'une lentille ophtalmique selon la revendication 3, dans lequel la pastille est supportée dans un ensemble d'ergots dans le couteau.

6. Procédé de fabrication d'une lentille ophtalmique selon la revendication 3, dans lequel la pastille est poussée hors du couteau avec un moyen choisi entre une goupille d'éjection (102), une impulsion d'air, et une de leurs combinaisons.

7. Procédé de fabrication d'une lentille ophtalmique selon la revendication 3, dans lequel le couteau est à une température comprise entre 120 °C en dessous de la $T_g$ et la $T_D$.

8. Procédé de fabrication d'une lentille ophtalmique selon la revendication 3, dans lequel le couteau a un bord conducteur qui est chanfreiné.

9. Procédé de fabrication d'une lentille ophtalmique selon la revendication 3, dans lequel le couteau a une longueur de pincement qui est inférieure à 5 fois le diamètre de la pastille, de préférence inférieure au diamètre de la pastille, plus préférablement inférieure à la moitié du diamètre de la pastille.

10. Procédé de fabrication d'une lentille ophtalmique selon la revendication 5, dans lequel la matrice d'extrusion a une longueur de pincement qui est inférieure à 5 fois le diamètre de la pastille, de préférence inférieure au diamètre de la pastille, plus préférablement inférieure à la moitié du diamètre de la pastille.

11. Procédé de fabrication d'une lentille ophtalmique selon la revendication 1, dans lequel la totalité du polymère de l'échantillon est incorporée dans la lentille.

12. Procédé de fabrication d'une lentille ophtalmique selon la revendication 1, dans lequel les parties du moule sont comprimées conjointement, puis ouvertes en moins de 10 minutes, de préférence en moins de 20 secondes.

13. Procédé de fabrication d'une lentille ophtalmique selon la revendication 12, dans lequel les parties du moule sont indépendamment à des températures comprises entre 120 °C en dessous de la $T_g$ et la $T_D$ du polymère, de préférence entre 50 °C en dessous de la $T_g$ et 50 °C au-dessus de la $T_F$.

14. Procédé de fabrication d'une lentille ophtalmique selon la revendication 1, dans lequel le polymère extrudé est sous la forme d'un ruban (104).

15. Procédé de fabrication d'une lentille ophtalmique selon la revendication 14, dans lequel l'échantillon est sous la forme d'un disque (106).

16. Procédé de fabrication d'une lentille ophtalmique selon la revendication 15, dans lequel le disque (106) a une épaisseur comprise entre 50 micromètres et 5 mm, de préférence entre 100 et 300 micromètres.

17. Procédé de fabrication d'une lentille ophtalmique selon la revendication 14, dans lequel :

(a) la découpe comprend le déplacement du ruban entre une matrice et un poinçon, la matrice se trouvant en dessous du ruban et le poinçon au-dessus du ruban (107) ; le glissement vers le bas d'un noyau mobile dans le poinçon contre le ruban et dans l'orifice de la matrice, le noyau mobile ayant un diamètre inférieur au diamètre de l'orifice de la matrice, poinçonnant ainsi un échantillon à partir du ruban ; et
(b) le dépôt comprend le fait de laisser tomber l'échantillon à travers l'orifice de la matrice dans la première moitié de moule (126).

18. Procédé de fabrication d'une lentille ophtalmique selon la revendication 14, dans lequel la découpe comprend en outre le pincement du ruban entre la matrice et le poinçon.

19. Procédé de fabrication d'une lentille ophtalmique selon la revendication 14, dans lequel la température du ruban est comprise entre 120 °C en dessous de la $T_g$ du polymère et la $T_D$, de préférence entre 100 °C en dessous de la $T_g$ du polymère et la $T_D$, plus préférablement entre 50 °C en dessous de la $T_g$ du polymère et 50 °C au-dessus de la $T_F$.

20. Procédé de fabrication d'une lentille ophtalmique selon la revendication 14, dans lequel le ruban est extrudé dans un environnement dans lequel la température de l'air est maintenue entre 50 °C en dessous de la $T_g$ du polymère et 50 °C au-dessus de la $T_F$.

21. Procédé de fabrication d'une lentille ophtalmique selon la revendication 14, comprenant en outre le soufflage d'air chaud (110) contre le ruban, la température de l'air étant comprise entre 50 °C en dessous de la $T_g$ du polymère et 50 °C au-dessus de la $T_F$.

22. Procédé de fabrication d'une lentille ophtalmique selon la revendication 1, comprenant en outre le pompage du polymère à partir de l'extrudeuse et vers une matrice d'extrusion avec une pompe de masse fondue.

23. Procédé de fabrication d'une lentille ophtalmique selon la revendication 22, dans lequel un système en boucle fermée de régulation de la pression est couplé à la pompe de masse fondue.

24. Procédé de fabrication d'une lentille ophtalmique selon la revendication 1, dans lequel la première partie de moule est un demi-moule femelle, et la seconde partie de moule est un demi-moule mâle.

25. Procédé de moulage d'une lentille ophtalmique selon la revendication 1, dans lequel l'espace entre les parties de moule est inférieur à 250 micromètres, de préférence inférieur à 20 micromètres, plus préférablement compris entre 5 et 15 micromètres.

26. Procédé de moulage d'une lentille ophtalmique selon la revendication 1, dans lequel le polymère contient des groupes de réticulation latents.

27. Procédé de moulage d'une lentille ophtalmique selon la revendication 26, dans lequel la température du moule, la force appliquée, et la durée de la compression sont suffisantes pour réticuler le polymère.

**28.** Procédé de moulage d'une lentille ophtalmique selon la revendication 26, dans lequel la température du moule est comprise entre 50 °C en dessous de la $T_g$ et la $T_D$.

**29.** Procédé de moulage d'une lentille ophtalmique selon la revendication 26, dans lequel la température du moule est supérieure à la température à laquelle le polymère est extrudé.

**30.** Procédé de moulage d'une lentille ophtalmique selon la revendication 1, dans lequel la température du moule est inférieure à la température à laquelle le polymère est extrudé.

**31.** Procédé de moulage d'une lentille ophtalmique selon la revendication 1, dans lequel le premier volume (150) est compris entre 3 et 100 microlitres.

**32.** Procédé de moulage d'une lentille ophtalmique selon la revendication 1, dans lequel le second volume (158) est compris entre 3 et 200 microlitres.

**33.** Procédé de moulage d'une lentille ophtalmique selon la revendication 1, dans lequel le volume de l'échantillon est de 0,01 % à 10 % supérieur au premier volume, de préférence de 1 % à 5 % supérieur au premier volume.

**34.** Procédé de fabrication d'une lentille ophtalmique selon la revendication 1, comprenant en outre un procédé cyclique, le procédé cyclique comprenant : le dépôt d'un second échantillon de polymère dans le moule ; les étapes étant répétées pour mouler une pluralité d'échantillons dans le moule.

**35.** Procédé de fabrication d'une lentille ophtalmique selon la revendication 34, dans lequel le procédé cyclique comprend en outre le fait de s'assurer que le moule est vide après le retrait de la lentille, de telle sorte que le second échantillon de polymère est déposé dans un moule vide.

**36.** Procédé de fabrication d'une lentille ophtalmique selon la revendication 36, dans lequel la vérification comprend le nettoyage du moule.

**37.** Procédé de fabrication d'une lentille ophtalmique selon la revendication 1, dans lequel on fournit une pluralité d'échantillons.

**38.** Procédé de fabrication d'une lentille ophtalmique selon la revendication 34 ou 37, dans lequel la pluralité d'échantillons a un volume moyen avec un écart-type $\sigma$.

**39.** Procédé de fabrication d'une lentille ophtalmique selon la revendication 38, dans lequel le volume moyen est compris entre le premier volume plus $\sigma$ et le second volume moins $\sigma$, de préférence entre le premier volume plus $2\sigma$ et le second volume moins $2\sigma$, plus préférablement entre le premier volume plus $3\sigma$ et le second volume moins $3\sigma$.

**40.** Procédé de fabrication d'une lentille ophtalmique selon la revendication 1, dans lequel la lentille ophtalmique est une lentille de contact ou une lentille intraoculaire.

**Fig. 1**

| Materials Chemistry Technology (32) | Material Handling Technology (34) | Molding/Shaping Technology (36) | Ejection Technology (38) |
|---|---|---|---|
| Extrude Wire Material (42) | Hot Face Pelletizing (48) | Pellets in Mold (54) | |
| Extrude Ribbon Material (44) | Punch-out Disk (50) | Disk in Mold (56) | |
| Feed Materials (46) | Mix and Dispense Material (52) | Mixture in Mold (58) | |
| | | Mold in Compression (60) | Open Mold Eject Lens (62) |

Post-Processing (40)

**Fig. 2**

*Fig. 3*

EP 1 226 924 B1

Fig. 4

94

102

100

73

97

96

**_Fig. 5_**

94

102

100

97

96

*Fig. 6*

Fig. 7

Fig. 8

EP 1 226 924 B1

**Fig. 9**

77

M

86

74

72

76

110

105

107

104

106

108

126

109

Fig. 10A

Fig. 10B

Fig. 10C

_Fig. 11_

111

77

113

78

115

116

118

119

M

114

112

120

_Fig. 12_

127

# Fig. 13A

# Fig. 13B

# Fig. 13C

# Fig. 13D

EP 1 226 924 B1

*Fig. 14*

130

*Fig. 15*

132

136

137

138

134

142    146

144

145

140

**Fig. 16**

**Fig. 17**

160

172

168

*Fig. 18*

166

178

164

162

176

**Fig. 19A**

**Fig. 19B**

**Fig. 19C**

_Fig. 20_

_Fig. 21A_

_Fig. 21B_

_Fig. 21C_

EP 1 226 924 B1

*Fig. 22*

EP 1 226 924 B1

Fig. 23A

Fig. 23B

EP 1 226 924 B1